# EUROPEAN PATENT SPECIFICATION

(11) **EP 4 258 701 B1**
(45) Date of publication and mention of the grant of the patent: **28.10.2026**
(21) Application number: 21924454.8
(22) Date of filing: 24.12.2021
(51) Int. Cl.: H04W 4/02, H04W 4/80, H04W 64/00, H04L 12/28, G01S 5/02, G01S 11/06, G06F 21/44, G08B 13/187, H04L 67/12

(54) **METHOD, APPARATUS AND SYSTEM FOR DETERMINING DEVICE POSITION**
VERFAHREN, VORRICHTUNG UND SYSTEM ZUR BESTIMMUNG DER POSITION EINER VORRICHTUNG
PROCÉDÉ, APPAREIL ET SYSTÈME DE DÉTERMINATION DE LA POSITION D'UN DISPOSITIF

(30) Priority: 08.02.2021 CN 202110182054
(43) Date of publication of application: 11.10.2023
(73) Proprietor: Huawei Technologies Co., Ltd., Shenzhen, Guangdong 518129 (CN)
(72) Inventor: XU, Tianliang, Shenzhen, Guangdong 518129 (CN)
(74) Representative: Körber, Martin Hans
(86) International application number: PCT/CN2021/141324
(87) International publication number: WO 2022/166461

(56) References cited:
- CN-A- 105 530 016
- CN-A- 105 530 016
- CN-A- 106 101 980
- CN-A- 110 139 212
- CN-A- 110 493 711
- CN-A- 111 948 604
- CN-B- 110 493 711
- US-A1- 2017 327 083
- US-A1- 2020 202 647
- US-A1- 2020 364 381
- US-A9- 2017 238 140

## Description

This application claims priority to Chinese Patent Application No. 202110182054.4, filed with the China National Intellectual Property Administration on February 8, 2021 and entitled "DEVICE LOCATION DETERMINING METHOD, APPARATUS, AND SYSTEM", which is referenced in its entirety.

### TECHNICAL FIELD

Embodiments of this application relate to the field of terminal technologies, and in particular, to a device location determining method, apparatus, and system.

### BACKGROUND

A user may purchase a specific security protection device (for example, a home camera, a door magnetic sensor, an infrared door control, or a visual intercom) and deploy the security protection device in the home, so that the user can check, through the security protection device when the user leaves the home, whether a stranger enters the home.

However, using the security protection device to perform monitoring may likely draw attention of a stranger. For example, when the user uses a camera or an infrared door control, and a stranger enters an area in which the security protection device is deployed, if the stranger discovers the security protection device, the stranger may damage the security protection device in advance. Document CN 110 493 711 A describes a positioning method and device, electronic equipment and a storage medium. Document US 2017/238140 A9 describes a locator beacon, method and system for identifying a first-in-line device. Document US 2020/364381 A1 describes methods and apparatus relating to environmental monitoring and control systems.

### SUMMARY

This application provides a device location determining method, apparatus, and system, to precisely locate, through a smart device having different transmission distances, an electronic device approaching the smart device.

To achieve the foregoing objective, this application provides the following technical solutions.

According to a first aspect, this application provides a device location determining method, applied to a smart device (for example, a smart speaker or a smart television) having an antenna structure. A radio signal transmission distance of the antenna structure includes a first transmission distance and a second transmission distance, and the first transmission distance is less than the second transmission distance. The method includes: The smart device receives information about a first electronic device (for example, a mobile phone) from the first electronic device. For example, the information about the first electronic device may be an identifier of the first electronic device. When determining to locate the first electronic device based on the information about the first electronic device, the smart device determines a first received strength parameter that is of the first electronic device and that is measured when the antenna structure works at the first transmission distance. When the first received strength parameter indicates that the first electronic device is located within the first transmission distance, the smart device determines a second received strength parameter that is of the first electronic device and that is measured when the antenna structure works at the second transmission distance. The smart device determines location information of the first electronic device based on the first received strength parameter and the second received strength parameter.

According to the first aspect of this application, the device location determining method is provided. In the method, when the smart device receives the information about the first electronic device, it indicates that a device approaching the smart device exists around the smart device. When the smart device determines to locate the first electronic device based on the information about the first electronic device, the first received strength parameter of the first electronic device is measured through the antenna structure. Because a larger distance between the first electronic device and the smart device indicates a smaller measured first received strength parameter, and a smaller distance between the first electronic device and the smart device indicates a larger measured first received strength parameter, the smart device may determine, based on the first received strength parameter, whether the first electronic device is located within the first transmission distance. When the first electronic device is located within the first transmission distance, it indicates that the first electronic device is located within a monitoring range of the smart device. Therefore, subsequently, the smart device may calculate the location information of the first electronic device based on both the second received strength parameter measured when the antenna structure works at the second transmission distance and the first received strength parameter, to precisely locating the electronic device approaching the smart device.

In an implementation of the first aspect, the location information of the first electronic device includes a location of the first electronic device relative to the smart device (for example, the first electronic device is located in a northwest direction of the smart device), and that the smart device determines location information of the first electronic device based on the first received strength parameter and the second received strength parameter includes: The smart device determines a distance between the first electronic device and the smart device based on the first received strength parameter. The smart device determines orientation information between the first electronic device and the smart device based on the second received strength parameter. The smart device determines the location of the first electronic device relative to the smart device based on the distance and the orientation information. The distance and the orientation between the first electronic device and the smart device are obtained through the received strength parameters measured when the antenna structure works at different transmission distances. Therefore, the location of the first electronic device relative to the smart device can be accurately obtained.

In an implementation of the first aspect, before the smart device receives the information about the first electronic device from the first electronic device, the method provided in this embodiment of this application further includes: The smart device broadcasts a discovery message, where the discovery message is for requesting a device that receives the discovery message to report information about the device to the smart device. For example, the smart device may periodically broadcast the discovery message according to a preset periodicity, or the smart device may periodically broadcast the discovery message according to a preset periodicity within a specified time period, or the smart device may broadcast the discovery message under triggering of another device. This is not limited in embodiments of this application.

In an implementation of the first aspect, the smart device has a whitelist, the whitelist records information about one or more devices, and the case in which the smart device determines to locate the first electronic device based on the information about the first electronic device further includes: a case in which the information about the first electronic device does not belong to the whitelist.

In an implementation of the first aspect, when the information about the first electronic device does not belong to the whitelist, the method provided in the first aspect of this application may further include: The smart device sends the information about the first electronic device to a second electronic device (for example, a mobile phone of Xiao Ming). The smart device receives a first operation instruction from the second electronic device. In response to the first operation instruction, the smart device determines to locate the first electronic device. In this solution, the smart device first determines, based on the information about the first electronic device, that the first electronic device does not belong to the whitelist, and then the smart device provides the information about the first electronic device for the second electronic device. In this way, it can be determined based on triggering of a user that the first electronic device approaching the smart device needs to be located.

In an implementation of the first aspect, when the information about the first electronic device belongs to the whitelist, the method provided in the first aspect of this application may further include: The smart device skips performing an operation of locating the first electronic device. Alternatively, the smart device provides, for another smart device in an area in which the smart device is located, indication information indicating that the first electronic device is not located. The another smart device may be a device that accesses a same wireless access device as the smart device. For example, the another smart device may be a smart television.

In an implementation of the first aspect, the smart device accesses a network through a wireless access device. The method provided in this embodiment of this application further includes: The smart device obtains the whitelist from the wireless access device. For example, the smart device may request the wireless access device (for example, a wireless router) to provide the whitelist for the smart device. Alternatively, the smart device may actively provide the whitelist for the smart device. In addition, when the whitelist is updated, the smart device may further obtain the updated whitelist from the wireless access device. For example, when the whitelist is updated, the wireless access device actively provides the updated whitelist for the smart device.

In an implementation of the first aspect, the method provided in the first aspect of this application further includes: The smart device sends the information about the first electronic device to a second electronic device. The smart device receives a second operation instruction from the second electronic device. In response to the second operation instruction, the smart device determines to locate the first electronic device. In this solution, after receiving the information about the first electronic device, the smart device sends the information about the first electronic device to the second electronic device, and then determines, based on the operation instruction from the second electronic device, whether to locate the first electronic device. For example, if the user (Xiao Ming) of the second electronic device determines that the first electronic device is an unknown device, the first operation instruction that instructs to perform positioning may be triggered. For example, if the user of the second electronic device determines that the first electronic device is a valid device (for example, a device of a family member or a friend of Xiao Ming), an operation instruction for not performing positioning may be triggered.

In an implementation of the first aspect, the method provided in the first aspect of this application further includes: starting a positioning software module of the smart device when the first received strength parameter indicates that the first electronic device is located within the first transmission distance, where the positioning software module is configured to calculate the location information of the first electronic device. In other words, the positioning software module of the smart device is in an off state in a normal case, and the smart device starts the positioning software module of the smart device only when the first electronic device is located within the first transmission distance. Certainly, if the positioning software module of the smart device is in a started state by default, the smart device may skip performing the step of starting the positioning software module of the smart device.

In an implementation of the first aspect, when the positioning software module of the smart device is in the started state, if the smart device determines, based on the first received strength parameter, that the first electronic device is located beyond the first transmission distance, the smart device switches off the positioning software module of the smart device. For example, a mobile phone of an unfamiliar user first approaches the smart device, and the smart device detects that a first received strength parameter of the mobile phone indicates that the mobile phone is located within the first transmission distance. If the mobile phone is subsequently away from the smart device, the smart device can still detect the first received strength parameter of the mobile phone, but the first received strength parameter of the mobile phone indicates that the mobile phone is located beyond the first transmission distance. In this case, the smart device may switch off the positioning software module of the smart device. For another example, when the smart device cannot detect the first received strength parameter of the mobile phone, or the first received strength parameter of the mobile phone is not detected in a continuous time period, or the smart device determines that the mobile phone has been located beyond the first transmission distance for a time period longer than a specified time period, the smart device may switch off the positioning software module of the smart device.

In an implementation of the first aspect, the method provided in the first aspect of this application further includes: The smart device receives a third operation instruction. In response to the third operation instruction, the smart device sets the radio signal transmission distance of the antenna structure. For example, the smart device may set the first transmission distance to 3 m and the second transmission distance to 5 m.

In an implementation of the first aspect, the antenna structure includes a first antenna (for example, a short-distance antenna) and a second antenna (a long-distance antenna) that are independently disposed. A radio signal transmission distance of the first antenna is the first transmission distance, and a radio signal transmission distance of the second antenna is the second transmission distance. That the smart device determines a first received strength parameter that is of the first electronic device and that is measured when the antenna structure works at the first transmission distance includes: The smart device measures the first received strength parameter of the first electronic device through the short-distance antenna. That the smart device determines a second received strength parameter that is of the first electronic device and that is measured when the antenna structure works at the second transmission distance includes: The smart device measures the second received strength parameter of the first electronic device through the long-distance antenna.

In an implementation of the first aspect, the antenna structure is a single antenna, and a radio signal transmission distance of the single antenna is the first transmission distance and the second transmission distance. That the smart device determines a received strength parameter that is of the first electronic device and that is measured when the antenna structure works at the first transmission distance includes: The smart device controls the antenna structure to work at the first transmission distance, to measure the first received strength parameter of the first electronic device through the antenna structure. The determining, when the first received strength parameter indicates that the first electronic device is located within the first transmission distance, a second received strength parameter that is of the first electronic device and that is measured when the antenna structure works at the second transmission distance includes: When the first received strength parameter indicates that the first electronic device is located within the first transmission distance, the smart device controls the radio signal transmission distance of the antenna structure to switch from the first transmission distance to the second transmission distance, to measure the second received strength parameter of the first electronic device through the antenna structure.

In an implementation of the first aspect, the smart device has a camera, and the method provided in the first aspect of this application further includes: The smart device adjusts a photographing angle of the camera based on the location information of the first electronic device, so that the photographing angle of the camera is towards a location of the first electronic device. In this way, an image of a user of the first electronic device can be accurately acquired through the camera of the smart device.

In an implementation of the first aspect, the method provided in the first aspect of this application further includes: The smart device sends a prompt message to the second electronic device, where the prompt message includes the location information of the first electronic device and/or alarm information, and the alarm information is for prompting that an unknown device or a suspicious person approaches the smart device. In this way, it is convenient for Xiao Ming to discover, through the second electronic device of Xiao Ming, that an unknown device or a suspicious person exists in the area in which the smart device is located and a location of the unknown device or the suspicious person.

According to a second aspect, an embodiment of this application provides a device location determining method. The method is applied to an electronic device, and the method includes: reporting an identifier of the electronic device to a smart device when the electronic device approaches the smart device.

In an implementation of the second aspect, the reporting an identifier of the electronic device to a smart device when the electronic device approaches the smart device further includes: When the electronic device approaches the smart device, if the electronic device receives a discovery message from the smart device, the electronic device reports the identifier of the electronic device to the smart device.

In other words, for example, the electronic device is a mobile phone. The mobile phone may measure a distance between the mobile phone and the smart device. When determining that the mobile phone approaches the smart device, the mobile phone may actively report the identifier of the electronic device to the smart device, or report the identifier of the electronic device to the smart device based on the discovery message of the smart device, so that the smart device determines a location of the mobile phone.

According to a third aspect, this application provides a device location determining system. The system includes one or more smart devices and a first electronic device. The smart device has an antenna structure. A radio signal transmission distance of the antenna structure includes a first transmission distance and a second transmission distance. The first transmission distance is less than the second transmission distance. The first electronic device is configured to perform the method described in the second aspect and the implementations, and the smart device is configured to perform the method described in the first aspect and the implementations. The smart device is configured to perform the method described in the first aspect and the implementations.

According to a fourth aspect of this application, a device location determining apparatus is provided. The apparatus is included in a smart device, and the apparatus has a function of implementing the behavior of the smart device in the first aspect and possible implementations. The function may be implemented by hardware, or may be implemented by hardware executing corresponding software. The hardware or the software includes one or more modules or units corresponding to the foregoing function, for example, a receiving module or unit, a determining module or unit, and a measurement module or unit.

According to a fifth aspect of this application, a device location determining apparatus is provided. The apparatus is included in an electronic device, and the apparatus has a function of implementing the behavior of the electronic device in the second aspect and possible implementations. The function may be implemented by hardware, or may be implemented by hardware executing corresponding software. The hardware or the software includes one or more modules or units corresponding to the foregoing function, for example, a sending module or unit, a determining module or unit, and a measurement module or unit.

According to a sixth aspect of this application, a smart device is provided. The smart device has an antenna structure, a radio signal transmission distance of the antenna structure includes a first transmission distance and a second transmission distance, and the first transmission distance is less than the second transmission distance. The smart device includes one or more processors and a memory. The memory is coupled to the one or more processors, the memory is configured to store computer program code, the computer program code includes computer instructions, and when the one or more processors execute the computer instructions, the smart device performs the device location determining method described in the first aspect or the implementations of the first aspect.

According to a seventh aspect of this application, an electronic device is provided. The electronic device includes one or more processors and a memory. The memory is coupled to the one or more processors, the memory is configured to store computer program code, the computer program code includes computer instructions, and when the one or more processors execute the computer instructions, the electronic device performs the device location determining method described in the second aspect or the implementations of the second aspect.

According to an eighth aspect of this application, a computer-readable storage medium is provided, including computer instructions. When the computer instructions are run on a smart device, the smart device is enabled to perform the device location determining method described in the first aspect or the implementations of the first aspect.

According to a ninth aspect of this application, a computer storage medium, a computer-readable storage medium, or a nonvolatile computer-readable storage medium is provided, storing computer instructions. When the computer instructions are run on a smart device, an electronic device is enabled to perform the device location determining method described in the second aspect or the implementations of the second aspect.

According to a tenth aspect of this application, a computer program product is provided. When the computer program product is run on a computer, the computer is enabled to perform the device location determining method described in the first aspect or the implementations of the first aspect.

According to an eleventh aspect of this application, a computer program product is provided. When the computer program product is run on a computer, the computer is enabled to perform the device location determining method described in the second aspect or the implementations of the second aspect.

It should be understood that, descriptions of technical features, technical solutions, beneficial effect, or similar words in this application do not imply that all features and advantages can be implemented in any individual embodiment. On the contrary, it may be understood that, the descriptions of the features or the beneficial effect mean that at least one embodiment includes a specific technical feature, technical solution, or beneficial effect. Therefore, the descriptions of the technical features, the technical solutions, or the beneficial effect in this specification may not necessarily be specific to a same embodiment. Further, the technical features, the technical solutions, and the beneficial effect described in embodiments may be combined in any proper manner. A person skilled in the art may understand that an embodiment may be implemented without one or more specific technical features or technical solutions, or beneficial effect in the specific embodiment. In other embodiments, additional technical features and beneficial effect may be further identified in a specific embodiment that does not reflect all embodiments.

### BRIEF DESCRIPTION OF DRAWINGS

FIG. 1 is a schematic diagram of a system architecture according to an embodiment of this application;
FIG. 2 is a schematic diagram of a layout of various smart devices in a home according to an embodiment of this application;
FIG. 3A is a schematic diagram of a structure of a mobile phone according to an embodiment of this application;
FIG. 3B is a schematic diagram of a structure of a smart device according to an embodiment of this application;
FIG. 4(A) and FIG. 4(B) are schematic diagrams of a mobile phone interface of a user according to an embodiment of this application;
FIG. 5 is a schematic diagram of a layout of smart devices in a user home according to an embodiment of this application;
FIG. 6A is a schematic flowchart of a device location determining method according to an embodiment of this application;
FIG. 6B is a schematic flowchart of another device location determining method according to an embodiment of this application;
FIG. 6C is a schematic flowchart of still another device location determining method according to an embodiment of this application;
FIG. 7(A) and FIG. 7(B) are schematic diagrams of another mobile phone interface of a user according to an embodiment of this application;
FIG. 8(A) and FIG. 8(B) are schematic diagrams of signal strength of a mobile phone 2 measured by each smart device according to an embodiment of this application;
FIG. 9(A) and FIG. 9(B) are schematic diagrams of another signal strength of a mobile phone 2 measured by each smart device according to an embodiment of this application;
FIG. 10 is a schematic diagram of transmission distances of a long-distance antenna and a short-distance antenna of a smart speaker according to an embodiment of this application; and
FIG. 11 is a schematic diagram of transmission distances of a long-distance antenna and a short-distance antenna of another smart speaker according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first room and a second room are merely for distinguishing between different rooms, and are not intended to limit a sequence thereof. A person skilled in the art may understand that the terms such as "first" and "second" do not limit a quantity or an execution sequence, and the terms such as "first" and "second" do not indicate a definite difference.

It should be noted that, in this application, the term "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a relative concept in a specific manner.

In this application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. At least one of the following items (pieces) or a similar expression thereof refers to any combination of these items, including any combination of singular items (pieces) or plural items (pieces). For example, at least one (piece) of a, b, or c may represent a, b, c, a and b, a and c, b and c, or a, b, and c, where a, b, and c may be singular or plural.

With reference to the accompanying drawings, the following describes in detail a device location determining method provided in an embodiment of this application.

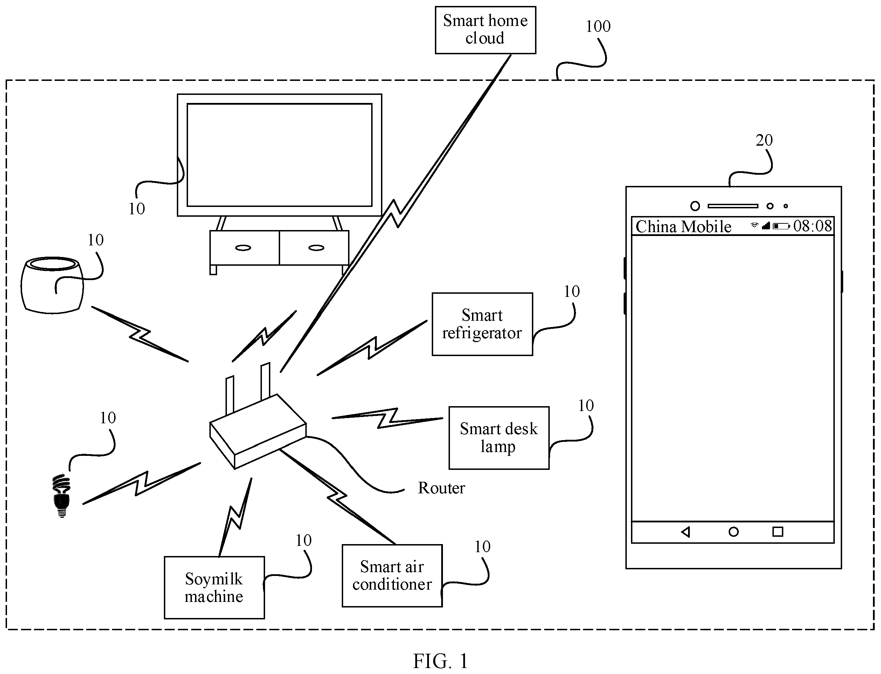

FIG. 1 is a schematic diagram of an example solution implementation system according to an embodiment of this application. The device location determining method provided in this embodiment of this application may be applied to a system 100. As shown in FIG. 1, the system 100 may include one or more smart devices 10 and an electronic device 20. This is not limited in embodiments of this application.

For example, the smart device 10 may be a smart doorbell, a smart speaker, a smart television, a floor sweeping robot, a story machine, a smart robot, a smart rice cooker, a smart desk lamp, an electric curtain, a smart power bank, a personal computer (personal computer, PC), a game host, a tablet computer, a smart air conditioner, a smart fitness device, a smart medical device, or the like. The electronic device 20 in this embodiment of this application may be a device such as a mobile phone, a personal digital assistant (personal digital assistant, PDA), a smartwatch, a wearable device, an augmented reality (augmented reality, AR) device, a virtual reality (virtual reality, VR) device, or a brain-computer interface device. A specific form of the electronic device 20 is not specially limited in embodiments of this application.

The one or more smart devices 10 may be deployed at different locations in a specified area. Coverage ranges of different smart devices 10 may overlap or may not overlap. This is not limited in embodiments of this application. The coverage range of the smart device 10 may be understood as a second transmission distance of a radio signal of an antenna structure of the smart device. In addition to having a coverage range, the smart device 10 may further have a monitoring range, and the monitoring range may be a first transmission distance of a radio signal of the antenna structure of the smart device. For example, the smart device 10 includes a short-distance antenna and a long-distance antenna that are independently disposed. In this case, the coverage range is a range corresponding to a maximum transmission distance of the long-distance antenna, and the monitoring range is a range corresponding to the short-distance antenna.

In some embodiments of this application, the smart device 10 may further have one or more of a camera and an audio obtaining component. In this way, the smart device 10 may acquire an image or a video of a user corresponding to a located device through the camera, or acquire audio data of a user corresponding to a located device through the audio obtaining component.

Optionally, as shown in FIG. 1, the system may further include a wireless access device, for example, a router. The router may be configured to provide a whitelist for the one or more smart devices 10. The whitelist may record information about one or more devices, and the information about the one or more devices indicates that the one or more devices do not need to be located. The information about the one or more devices may be information about devices that access a wireless network through the router.

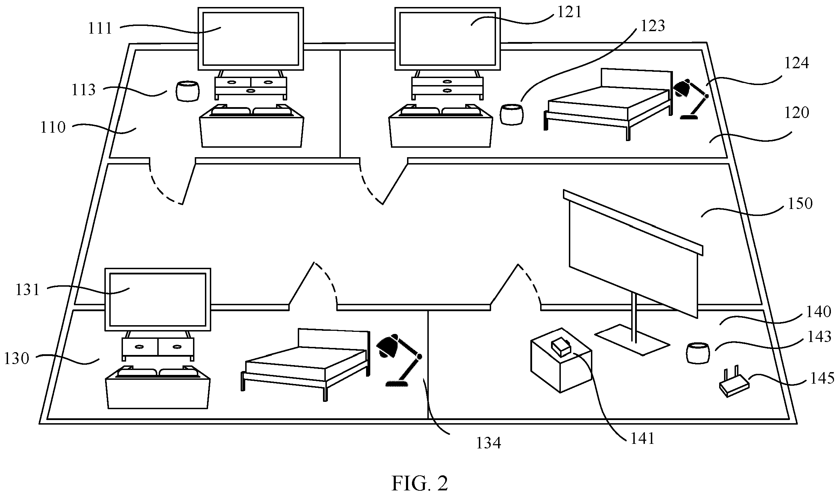

For example, the specified area is a home area. As shown in FIG. 2, the one or more smart devices 10 include one or more of the following devices: a smart device located in a first room 110, a smart device located in a second room 120, a smart device located in a third room 130, and a smart device located in a fourth room 140. For example, the smart device located in the first room 110 may include one or more of the following: a smart television 111, a smart speaker 113, a smart temperature regulating device (for example, a smart air conditioner, a smart fan, or a smart air purifier), a floor sweeping robot, a smart lamp, and the like. The smart temperature regulating device (for example, the smart air conditioner, the smart fan, or the smart air purifier), the floor sweeping robot, the smart lamp, and the like are not shown in FIG. 2. The smart device located in the second room 120 includes one or more of the following: a smart television 121, a smart desk lamp 124, and a smart speaker 123. The smart device in the third room 130 includes one or more of the following: a smart television 131, a smart desk lamp 134, and a smart temperature regulating device. The smart device located in the fourth room 140 includes one or more of the following: a smart speaker 143, a smart projection device 141, and a smart temperature regulating device.

As shown in FIG. 2, the router shown in FIG. 1 may be a wireless router 145 deployed in the fourth room 140.

The smart device 10 may discover, through a wireless technology, the electronic device 20 approaching the smart device 10. In addition, one or more target antennas used in cooperation with the wireless technology may be further disposed on the smart device 10. The smart device 10 may receive, based on the one or more target antennas, signals sent by the electronic device 20, to calculate a received strength parameter more accurately based on the signals received by the plurality of target antennas. The received strength parameter is, for example, a received signal strength indicator (received signal strength indicator, RSSI) or reference signal received power (reference signal received power, RSRP). Therefore, a distance between the smart device 10 and the electronic device 20 is determined based on the received strength parameter, to implement proximity discovery. In the following embodiments of this application, an example in which the received strength parameter is the RSSI is used for description.

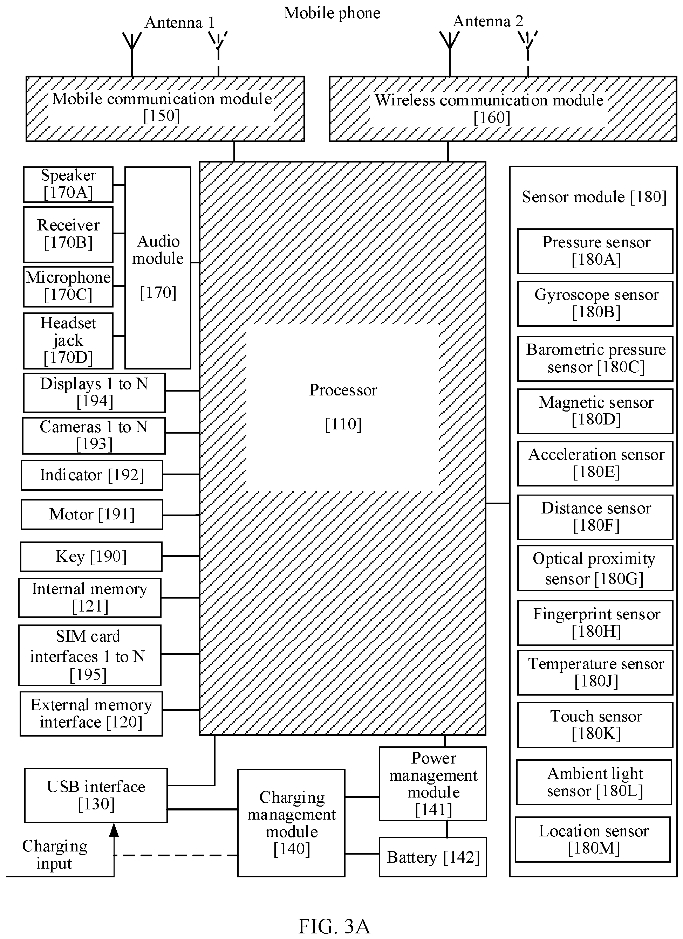

Refer to FIG. 3A. FIG. 3A uses an example in which the electronic device 20 is a mobile phone. FIG. 3A is a schematic diagram of a structure of a mobile phone according to an embodiment of this application. The mobile phone may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a location conduction sensor 180M, and the like.

It may be understood that a structure shown in this embodiment of this application does not constitute a specific limitation on the mobile phone. In some other embodiments of this application, the mobile phone may include more or fewer components than those shown in the figure, or may combine some components, or may split some components, or may have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the mobile phone. The controller may generate an operation control signal based on an instruction operation code and a time sequence signal, to complete control of instruction reading and instruction execution.

A memory configured to store instructions and data may be further disposed in the processor 110. In some embodiments, the memory in the processor 110 is a cache. The memory may store instructions or data that is recently used or to be cyclically used by the processor 110. When needing to use the instructions or the data again, the processor 110 may directly call the instructions or the data from the memory. This avoids repeated accessing and reduces a wait time for the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). The I2S interface may be configured to perform audio communication. The PCM interface may also be used to perform audio communication, and sample, quantize, and code an analog signal. The UART interface is a universal serial data bus, and is configured to perform asynchronous communication. The bus may be a two-way communication bus. The bus converts to-be-transmitted data between serial communication and parallel communication. In some embodiments, the UART interface is generally configured to connect the processor 110 to the wireless communication module 160. The MIPI interface may be configured to connect the processor 110 to a peripheral component such as the display 194 or the camera 193. The processor 110 communicates with the display 194 through the DSI interface, to implement a display function of the mobile phone. The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like.

The USB interface 130 is an interface that conforms to a USB standard specification, and may be specifically a Mini USB interface, a Micro USB interface, a USB Type-C interface, or the like. The USB interface 130 may be configured to connect to a charger to charge the mobile phone, or may be configured to transmit data between the mobile phone and a peripheral device, or may be configured to connect to a headset for playing audio through the headset. The interface may be further configured to connect to another electronic device such as an AR device.

It may be understood that an interface connection relationship between the modules shown in this embodiment of this application is merely used as an example for description, and does not constitute a limitation on the structure of the mobile phone. In some other embodiments of this application, the mobile phone may alternatively use an interface connection manner different from that in the foregoing embodiment, or a combination of a plurality of interface connection manners.

The charging management module 140 is configured to receive a charging input from a charger. The power management module 141 is configured to connect the battery 142 and the charging management module 140 to the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the mobile phone may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone may be configured to cover one or more communication frequency bands Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the mobile phone, to wireless communication including 2G, 3G, 4G, 5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal.

The wireless communication module 160 may provide a solution to wireless communication that is applied to a mobile phone and that includes a wireless local area network (wireless local area network, WLAN) (for example, a wireless fidelity (wireless fidelity, Wi-Fi) network), Bluetooth, a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

For example, in this embodiment of this application, the electronic device 20 may send information about the electronic device 20 to the smart device 10 through the wireless communication module 160.

In some embodiments, in the mobile phone, the antenna 1 and the mobile communication module 150 are coupled, and the antenna 2 and the wireless communication module 160 are coupled, so that the mobile phone can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone implements the display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light emitting diode (organic light emitting diode, OLED), an active-matrix organic light emitting diode or an active-matrix organic light emitting diode (active-matrix organic light emitting diode, AMOLED), a flexible light emitting diode (flexible light emitting diode, FLED), a mini-LED, micro-LED, a micro-OLED, a quantum dot light emitting diode (quantum dot light emitting diode, QLED), or the like. In some embodiments, the mobile phone may include one or N displays 194, where N is a positive integer greater than 1.

The mobile phone may implement a photographing function through the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone may include one or N cameras 193, where N is a positive integer greater than 1.

The digital signal processor is configured to process a digital signal, and may process another digital signal in addition to the digital image signal. The video codec is configured to compress or decompress a digital video. The mobile phone may support one or more video codecs. In this way, the mobile phone can play or record videos in a plurality of coding formats, for example, moving picture experts group (moving picture experts group, MPEG)-1, MPEG-2, MPEG-3, and MPEG-4.

The external memory interface 120 may be configured to connect to an external storage card, for example, a Micro SD card, to extend a storage capability of the electronic device. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage area and a data storage area. The program storage area may store an operating system, an application required by at least one function (for example, a voice playing function or an image playing function), and the like. The data storage area may store data (for example, audio data and a phone book) created when the electronic device is used, and the like. In addition, the internal memory 121 may include a high-speed random access memory, or may include a nonvolatile memory, for example, at least one magnetic disk storage device, a flash memory, or a universal flash storage (universal flash storage, UFS).

The mobile phone may implement an audio function through the audio module 170, the speaker 170A, the receiver 170B, the microphone 170C, the headset jack 170D, the application processor, and the like. The audio function is, for example, music playback and recording.

The audio module 170 is configured to convert digital audio information into an analog audio signal for output, and is also configured to convert analog audio input into a digital audio signal. The speaker 170A, also referred to as a "loudspeaker", is configured to convert an audio electrical signal into a sound signal. The mobile phone may listen to music or answer a hands-free call through the speaker 170A. The receiver 170B, also referred to as an "earpiece", is configured to convert an electrical audio signal into a sound signal. When the mobile phone answers a call or receives a voice message, the receiver 170B may be put close to a human ear to listen to a voice. The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the mobile phone. In some other embodiments, two microphones 170C may be disposed in the mobile phone, to acquire a sound signal and further implement a noise reduction function. In some other embodiments, three, four, or more microphones 170C may alternatively be disposed in the mobile phone, to acquire a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. The gyro sensor 180B may be configured to determine a motion posture of the electronic device. The barometric pressure sensor 180C is configured to measure barometric pressure. In some embodiments, the electronic device calculates an altitude based on a value of the barometric pressure measured by the barometric pressure sensor 180C, to assist in positioning and navigation. The magnetic sensor 180D includes a Hall sensor. The acceleration sensor 180E may detect magnitude of accelerations in various directions (generally on three axes) of the electronic device. The distance sensor 180F is configured to measure a distance. The mobile phone may measure a distance through infrared light or a laser. The optical proximity sensor 180G may include, for example, a light emitting diode (LED), and an optical detector, for example, a photodiode. The light emitting diode may be an infrared light emitting diode. The ambient light sensor 180L is configured to sense ambient light brightness. The mobile phone may adaptively adjust brightness of the display 194 based on the sensed brightness of the ambient light. The temperature sensor 180J is configured to detect a temperature. In some embodiments, the mobile phone executes a temperature processing policy based on the temperature detected by the temperature sensor 180J.

The fingerprint sensor 180H is configured to acquire a fingerprint. The mobile phone may use a feature of the acquired fingerprint to implement fingerprint-based unlocking, application lock access, fingerprint-based photographing, fingerprint-based call answering, and the like. The touch sensor 180K is also referred to as a touch panel. The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194.

In this embodiment of this application, the location conduction sensor 180M may obtain location information of the mobile phone, and convert the location information into an available output signal. For example, for the mobile phone, the location sensor 180M may be a global positioning system (global positioning system, GPS) sensor, and may determine longitude and latitude coordinates of the mobile phone. This is not limited in embodiments of this application.

The key 190 includes a power key, a volume key, and the like. The key 190 may be a mechanical key, or may be a touch key. The mobile phone may receive key input, and generate key signal input related to user setting and function control of the mobile phone.

The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, message receiving, an alarm clock, and a game) may also correspond to different vibration feedback effects. A touch vibration feedback effect may further be customized.

The indicator 192 may be an indicator light, and may be configured to indicate a charging status and a power change, or may be configured to indicate a message, a missed call, a notification, and the like.

The SIM card interface 195 is configured to connect to a SIM card.

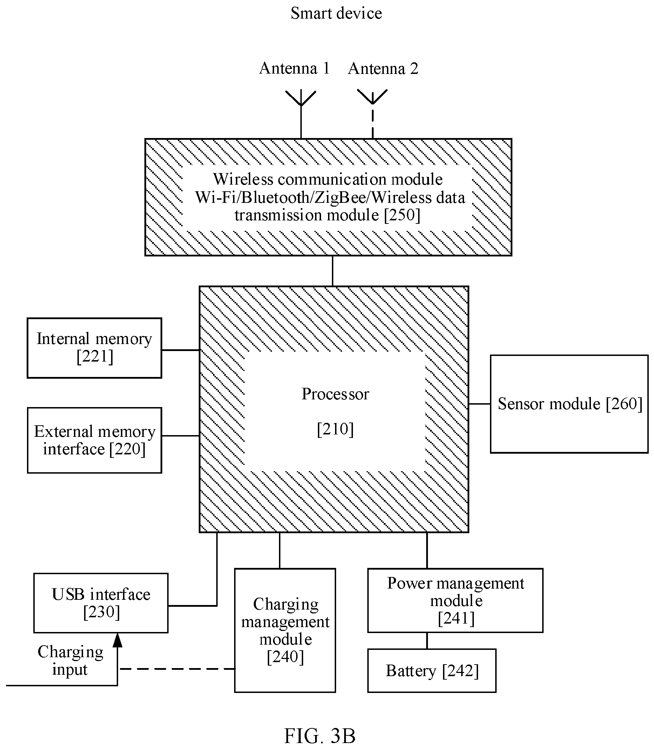

In some embodiments of this application, for a hardware structure of the smart device 10, refer to a structure shown in FIG. 3B. The smart device 10 includes a processor 210, an internal memory 221, an external memory interface 220, a USB interface 230, a charging management module 240, a battery management module 241, a battery 242, a sensor module 260, a wireless communication module 250, an antenna 1, and an antenna 2. For functions of the components of the smart device 10, refer to the functions of the related components of the mobile phone shown in FIG. 3A. Details are not described herein again. It should be noted that, when the smart device 10 is a device without a display, the hardware structure of the smart device 10 may not include a display. When the smart device 10 is a device having a display, for example, when the smart device 10 is a smart television or a smart speaker with a display, the hardware structure of the smart device 10 may include the display. The hardware structure of the smart device 10 may further include a camera or an audio obtaining component. Optionally, the antenna 1 and the antenna 2 may be physically a same antenna, or may be different wires.

It should be noted that the smart device 10 may include more or fewer components than those shown in FIG. 3B, or combine some components, or split some components, or have different component arrangements. The components shown in the figure may be implemented by hardware, software, or a combination of software and hardware.

It should be understood that, the mobile phone and the smart device may include all the hardware structures described above, or include some of the foregoing hardware structures, or have more other hardware structures that are not listed above. This is not limited in embodiments of this application.

It should be further understood that, as an electronic device, a mobile phone or a portable device may use a software system such as a layered architecture, a Harmony OS (Harmony OS) architecture, an event-driven architecture, a microcore architecture, a microservice architecture, or a cloud architecture.

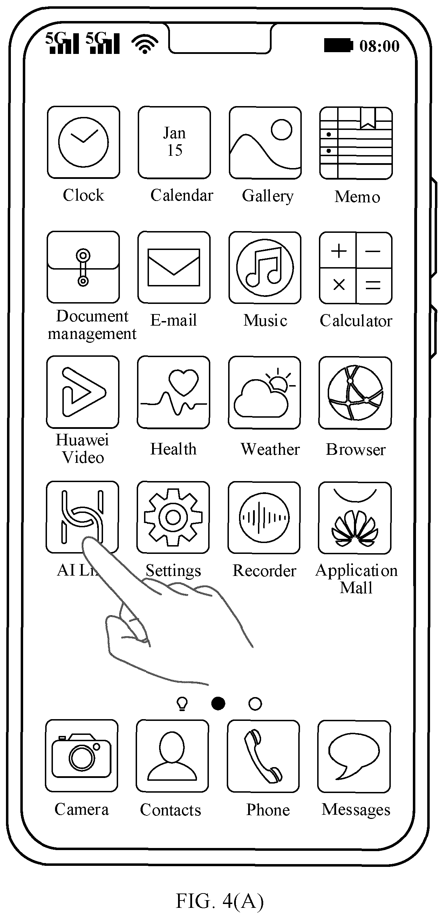

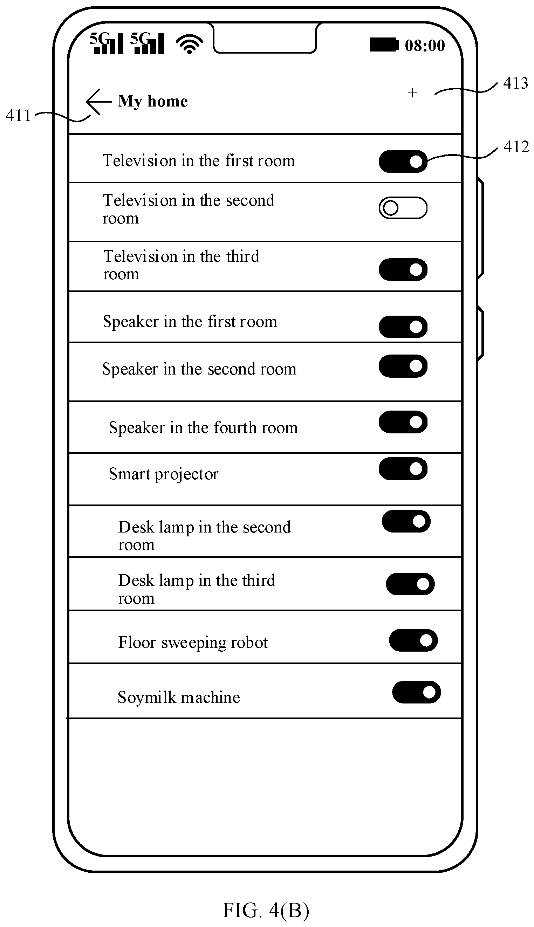

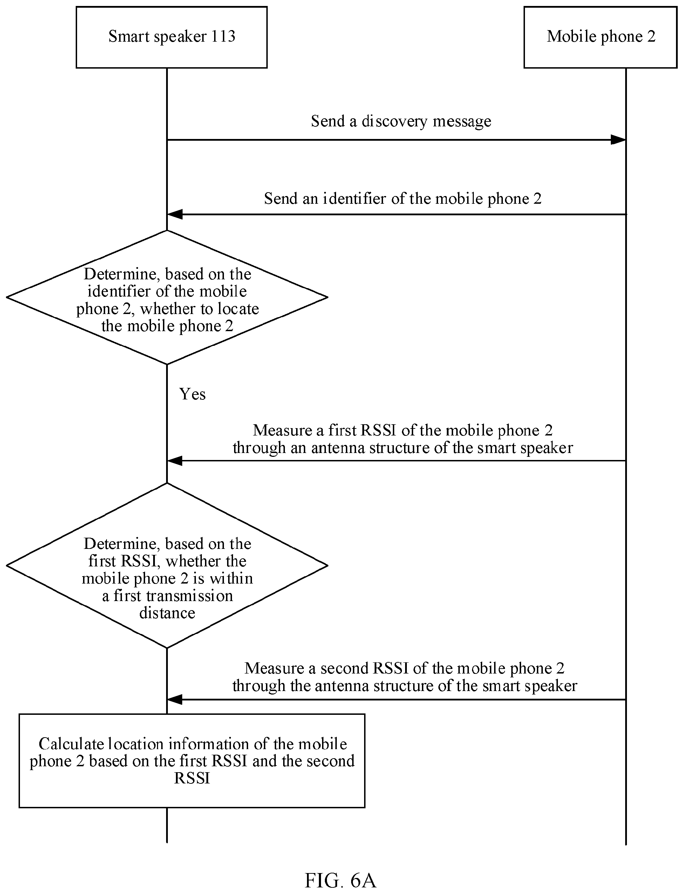

The method provided in embodiments of this application is applicable to the following scenario: An interface shown in FIG. 4(A) is an interface of a mobile phone 1 of Xiao Ming. Xiao Ming taps an application (application, App) running on the mobile phone 1, for example, an AI Life App, to trigger the mobile phone 1 to enter an interface shown in FIG. 4(B). On the interface shown in FIG. 4(B), the user may see a status of each smart device and a status of a router in the home scenario shown in FIG. 2. The user may trigger a control 411 to exit the current interface. The user may trigger a control 413 to add a smart device deployed in the home area in the current smart scenario. The user may trigger a control 412 corresponding to each smart device, to select whether to set the smart device as a monitoring point. For example, the user may choose to trigger the control 412 corresponding to a smart device except the smart television in the second room to be in a started state, and trigger the control 412 corresponding to the smart television in the second room to be in an off state. When a control corresponding to a smart device is in the off state, it indicates that the smart device may not be used as a monitoring point, in other words, may not perform the method shown in FIG. 6A to FIG. 6C in embodiments of this application. If a control corresponding to a smart device is in the started state, it indicates that the smart device is subsequently used as a monitoring point, to perform the method shown in FIG. 6A to FIG. 6C in embodiments of this application.

After the user selects a monitoring point on the interface shown in FIG. 4(B), the user may use one or more smart devices that are used as monitoring points to locate a device that enters the home of the user after the user leaves the home.

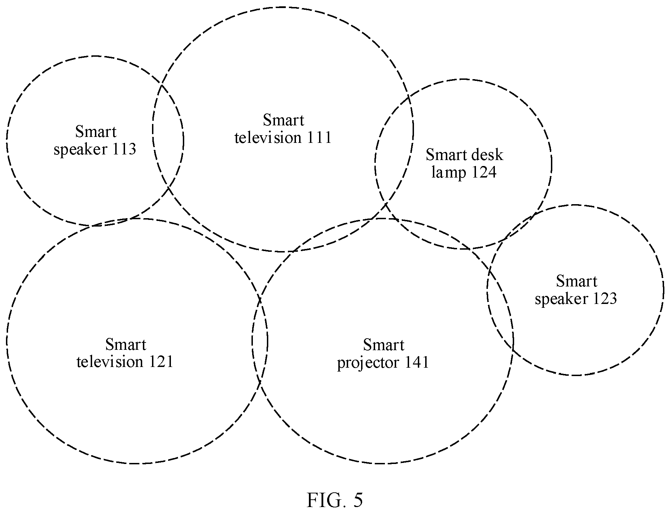

In addition to setting which smart devices may be used as monitoring points and which smart devices may not be used as monitoring points, the user may further trigger the mobile phone to set a coverage range of each monitoring point, so that all smart devices used as monitoring points cover the home area of the user as much as possible. For example, as shown in FIG. 5, the user may trigger the mobile phone to set a coverage range of the smart television 111 to A m, a coverage range of the smart speaker 113 to B m, a coverage range of the smart desk lamp 124 to C m, and a coverage range of the smart speaker 123 to D m. For example, A is 4 m, B is 3 m, C is 2 m, and D is 3 m, so that the entire indoor space can be fully covered.

Optionally, coverage ranges of all smart devices may be the same or may be different. This is not limited in embodiments of this application. Optionally, due to factors such as irregular attenuation of a signal and blocking of an obstacle, the coverage range of the smart device may not be the regular circle shown in FIG. 5. The value of the coverage range may be an approximate, average, or estimated value, and is not necessarily an accurate value. A specific shape of the coverage range is not limited in embodiments of this application.

For home space that needs to be focused on, high/ultra-high precision may be set. In this embodiment of this application, Xiao Ming may trigger the mobile phone 1 to set a coverage range of a smart device arranged in the space at a centimeter level. In other words, the smart device may support a minimum of cm-level distance setting. For example, for the second room 120 that needs to be focused on, Xiao Ming may trigger the mobile phone 1 to set a coverage range of the smart speaker 123 to 50 cm. Optionally, the antenna 1 of the smart speaker 123 may be used to implement cm-level positioning. For non-key areas, a WLAN long antenna (namely, the antenna 2 of the smart device) and WLAN power adjustment may be used to achieve a sensing area of a large coverage range. For example, the coverage range is set to 3 m, 5 m, or 10 m.

With reference to specific embodiments, the following describes in detail a device location determining method provided in an embodiment of this application through an example in which the smart device 10 is the smart speaker 113 deployed in the home area of Xiao Ming and the electronic device 20 is a mobile phone 2 of a user X approaching the home area of Xiao Ming.

In some embodiments of this application, after being powered on, the smart speaker 113 accesses a wireless network through the wireless router 145 deployed in the home area of Xiao Ming. When Xiao Ming chooses to use the smart speaker 113 and the smart television 111 in the first room as monitoring points, referring to FIG. 6A, the smart speaker 113 or the smart television 111 sends a discovery message. The discovery message is for requesting information fed back by a device that receives the discovery message to the sender (for example, the smart speaker 113). For example, when the mobile phone 2 is in the coverage range or a monitoring range of the smart speaker 113, the mobile phone 2 may receive the discovery message sent by the smart speaker 113. The mobile phone 2 may send an identifier of the mobile phone 2 to the smart speaker 113 in response to the discovery message, where the identifier is information fed back by the mobile phone 2 to the smart speaker 113.

When the smart speaker 113 and the smart television 111 are selected as monitoring points, the smart speaker 113 and the smart television 111 may send a discovery message, to discover whether another device exists around. When the smart speaker 113 and the smart television 111 are not selected as monitoring points, the smart speaker 113 and the smart television 111 do not send the discovery message. Optionally, whether the smart device is selected as a monitoring point may be set by the user through a user graphical interface, or may be configured by a manufacturer of the smart device before the device is delivered from a factory. Optionally, whether the smart device is selected as a monitoring point may be implemented in a manner of software and/or hardware configuration, and may be implemented through a switch of a user graphical interface button or a smart device physical button.

In an example, the discovery message is sent by the smart speaker 113 or the smart television 111 in a broadcast form. In this embodiment of this application, the smart speaker 113 or the smart television 111 may periodically broadcast the discovery message according to a preset periodicity. For example, the preset periodicity may be once every 5 seconds, once every 10 seconds, once every 50 milliseconds, or once every 100 milliseconds. This is not limited in embodiments of this application. The smart speaker 113 and the smart television 111 may send the discovery message in a same periodicity or different periodicities. This is not limited in embodiments of this application. Optionally, Xiao Ming may set, through the mobile phone 1 or through the smart device, the preset periodicity for sending the discovery message by the smart device. Optionally, the preset periodicity may be preset by the manufacturer of the smart device before delivery.

In an example, the discovery message may further carry an identifier of the smart device 10, and the identifier of the smart device 10 is for identifying the smart device 10. In this way, the device that receives the discovery message may determine the smart device from which the discovery message is sent. For example, the discovery message sent by the smart speaker 113 carries an identifier of the smart speaker 113. The identifier of the smart speaker 113 may be other information that can identify the smart speaker 113, for example, a media access control (media access control, MAC) address, a name, or an IP address of the smart speaker 113. This is not limited in embodiments of this application.

When approaching the smart speaker 113 (in other words, located within the coverage range or the monitoring range of the smart speaker 113), the mobile phone 2 receives the discovery message from the smart speaker 113, and another device (for example, the smart television 111) that is also located within the coverage range or the monitoring range of the smart speaker 113 also receives the discovery message from the smart speaker 113.

Generally, after receiving the discovery message, the smart television 111 also needs to send an identifier of the smart television 111 to the smart speaker 113. Therefore, the smart speaker 113 also receives the identifier of the smart television 111 fed back by the smart television 111. However, the smart speaker 113 actually does not need to locate the smart television 111. In other words, the smart speaker 113 may actually not receive the identifier of the smart television 111 fed back by the smart television 111. Therefore, after receiving the discovery message sent by the smart speaker 113, the smart television 111 may first determine whether to respond to the discovery message.

Optionally, the determining, by the smart television 111, whether to respond to the discovery message may be implemented through a whitelist. For example, if the smart television 111 finds that the device (the smart speaker 113) corresponding to a discovery request or the identifier of the device (the identifier of the smart speaker 113) belongs to the whitelist, the smart television 111 may not respond to the discovery message, in other words, does not need to send the identifier of the smart television 111 to the smart speaker 113.

For the mobile phone 2, in a possible case, the mobile phone 2 may not store the whitelist, or the mobile phone 2 cannot obtain the whitelist. The case in which the mobile phone 2 does not store or cannot obtain the whitelist may include but is not limited to a case in which the mobile phone 2 is an unknown device, the mobile phone 2 is not a trusted device, the mobile phone 2 has not been connected to the wireless router 145 before, the mobile phone 2 is not a device that frequently appears in the coverage range or the monitoring range in a long period of time, or the mobile phone 2 is not a device included in a smart home cloud list. In this case, when receiving the discovery message, the mobile phone 2 needs to send the identifier of the mobile phone 2 to the smart speaker 113.

In another possible case, the mobile phone 2 stores the whitelist, or the mobile phone 2 may obtain the whitelist. The case in which the mobile phone 2 stores the whitelist or can obtain the whitelist may include but is not limited to a case in which the mobile phone 2 is a known device, the mobile phone 2 is a trusted device, the mobile phone 2 has connected to the wireless router 145 before, the mobile phone 2 is a device that frequently appears in the coverage range or the monitoring range in a long period of time, or the mobile phone 2 is a device included in the smart home cloud list. In this case, when receiving the discovery message, the mobile phone 2 determines that the device (the smart speaker 113) corresponding to the discovery request or the identifier of the device (the identifier of the smart speaker 113) belongs to the whitelist. In this case, the mobile phone 2 may not feed back the identifier of the mobile phone 2. In other words, the mobile phone 2 does not send the identifier of the mobile phone 2 to the smart speaker 113. Generally, if the mobile phone 2 determines that the identifier of the smart speaker 113 belongs to the whitelist, it indicates that the mobile phone 2 and the smart speaker 113 access the wireless network through the same wireless router 145, and it may be inferred that the mobile phone 2 may not be an unknown device.

To reduce power consumption of the smart device 10, in some embodiments of this application, the smart speaker 113 or the smart television 111 may periodically send the discovery message within a specified time period according to a respective periodicity.

For example, Xiao Ming may set the specified time period on the AI Life App through the AI Life App. For example, the specified time period is a home leave time period (for example, 8:00 to 20:00) of Xiao Ming. In the home leave time period, the smart speaker 113 or the smart television 111 periodically broadcasts the discovery message according to the respective periodicity. In a time period other than 8:00 to 20:00, the smart speaker 113 or the smart television 111 generally does not broadcast the discovery message.

In some embodiments of this application, Xiao Ming may start a home leave mode through the foregoing AI Life App. When the home leave mode is started, the smart speaker 113 or the smart television 111 periodically broadcasts the discovery message according to the respective periodicity in the home leave time period. In other words, if the home leave mode is not started, the smart speaker 113 or the smart television 111 generally does not broadcast the discovery message.

In some embodiments of this application, the smart device and/or a wireless network access device in the home of Xiao Ming can automatically determine whether the home owner has left the home. For example, when the wireless network access device discovers that no mobile terminal device accesses the network through the wireless network access device, it is determined that the home owner has left the home; and when a mobile terminal device accesses the network through the wireless network access device, it is determined that the home owner is at home.

In a scenario of this embodiment of this application, when a smart doorbell is deployed on the home door of the user home, in this embodiment of this application, the user may trigger the mobile phone to set the smart doorbell deployed on the home door of the user home to periodically send the discovery message when the user leaves the home. When the smart doorbell detects a device that needs to be located, the smart doorbell triggers another smart device (for example, the smart television 111, the smart television 121, the smart speaker 113, the smart speaker 123, or the smart desk lamp 124) to send the discovery message. This is because the user generally enters the home area from the home door. Therefore, the smart doorbell deployed on the home door of the user home is generally the first device that detects whether a person enters an area. Therefore, the smart doorbell deployed on the home door of the user home may be used as a device that triggers another device to send the discovery message. After another smart device receives a trigger message sent by the smart doorbell deployed on the home door of the user home, the another smart device may periodically send the discovery message according to a set periodicity. In other words, the smart speaker 113 may periodically send the discovery message according to the preset periodicity after being triggered by another device. Alternatively, when no smart doorbell is deployed on the home door of the user home, the one or more smart devices 10 send the discovery message within a specified time period according to the preset periodicity.

In some embodiments of this application, when the user X carries the mobile phone 2 and approaches the smart speaker 113, the mobile phone 2 can be sensed. For example, the mobile phone 2 receives the discovery message sent by the smart speaker 113. As shown in FIG. 6A, the mobile phone 2 sends information about the mobile phone 2 to the smart speaker 113 in response to the discovery message, so that the smart speaker 113 senses that the mobile phone 2 exists around the smart speaker.

The information about the mobile phone 2 is for identifying the mobile phone 2. For example, the information about the mobile phone 2 may be the identifier of the mobile phone 2. For example, the identifier of the mobile phone 2 may be one or more of an internet protocol

(internet protocol, IP) address, a subscription permanent identifier (subscription permanent identifier, SUPI), a permanent equipment identifier (permanent equipment identifier, PEI), a generic public subscription identifier (generic public subscription identifier, GPSI), an international mobile subscriber identifier (international mobile subscriber identifier, IMSI), an international mobile equipment identity (international mobile equipment identity, IMEI), an IP quintuple (5-tuple), a mobile station international integrated service digital network number (mobile station international integrated service digital network number, MSISDN), a MAC address, and the like. For any part related to identification information in embodiments of this application, refer to the description herein. Details are not described again subsequently.

For example, the mobile phone 2 may be configured to broadcast the identifier of the mobile phone 2 according to the preset periodicity. In this way, even if the mobile phone 2 does not receive the discovery message sent by the smart speaker 113 or the smart television 111, a smart device within the broadcast range of the mobile phone 2 may receive the identifier of the mobile phone 2. In this case, the process of sending the discovery message by the smart speaker 113 may be omitted.

In some embodiments of this application, the mobile phone 2 may be configured to send the identifier of the mobile phone 2 to a smart device A when receiving a discovery message sent by the smart device A. For example, if the mobile phone 2 receives the discovery message sent by the smart television 111, the mobile phone 2 sends the identifier of the mobile phone 2 to the smart television 111. If the mobile phone 2 receives the discovery message sent by the smart speaker 113, the mobile phone 2 sends the identifier of the mobile phone 2 to the smart speaker 113. It should be noted that, the discovery message may further carry an identifier of the smart device A, so that the mobile phone 2 determines that the discovery message is from the smart device A after receiving the discovery message.

In some embodiments of this application, there may be a plurality of smart devices 10 in an area. For example, in addition to the smart speaker 113, the smart television 111 also exists in the living room. Therefore, after receiving the discovery message from the smart speaker 113, the mobile phone 2 may broadcast the identifier of the mobile phone 2 in response to the discovery message. In this way, not only the smart speaker 113 can receive the identifier of the mobile phone 2, but also the smart television 111 can receive the identifier of the mobile phone 2.

In some embodiments of this application, there may be a plurality of smart devices 10 in an area, for example, in addition to the smart speaker 113, the smart television 111 also exists in the living room. Therefore, after the smart speaker 113 obtains the identifier of the mobile phone 2, the smart speaker 113 may broadcast the obtained identifier of the mobile phone 2, so that another device (for example, the smart television 113) can receive the identifier of the mobile phone 2. In this way, the process in which the smart television 113 obtains the identifier of the mobile phone 2 by sending the discovery message may be omitted. In other words, in addition to receiving the identifier of the mobile phone 2 sent by the mobile phone 2, the smart device 10 may further receive the identifier of the mobile phone 2 through another smart device.

In some embodiments of this application, an example in which the smart device 10 is the smart speaker 113 is used. When the smart speaker 113 obtains the identifier of the mobile phone 2, if the smart speaker 113 determines to locate the mobile phone 2, the smart speaker 113 may broadcast the obtained identifier of the mobile phone 2. If the smart speaker 113 determines not to locate the mobile phone 2, the smart speaker 113 may not broadcast the identifier of the mobile phone 2, and send, to another smart device (for example, the smart television 111, the smart television 121, the smart speaker 113, the smart speaker 123, or the smart desk lamp 124), a message indicating that the mobile phone 2 is not located. For example, the smart speaker 113 has a whitelist. If the smart speaker 113 determines that the identifier of the mobile phone 2 does not belong to the whitelist, the smart speaker 113 determines to locate the mobile phone 2. If the smart speaker 113 determines that the identifier of the mobile phone 2 belongs to the whitelist, the smart speaker 113 determines not to locate the mobile phone 2. Certainly, for a manner in which the smart speaker 113 determines to locate or not to locate the mobile phone 2, refer to descriptions in the following embodiment. Details are not described herein again.

In some embodiments of this application, when the smart speaker 113 obtains the information about the mobile phone 2, as shown in FIG. 6A, the smart speaker 113 determines, based on the information about the mobile phone 2, whether to locate the mobile phone 2.

For example, in a scenario of this application, the smart speaker 113 has a whitelist, and the whitelist records information about one or more devices. If the smart speaker 113 determines that the information about the mobile phone 2 does not belong to the whitelist, the smart speaker 113 determines to locate the mobile phone 2.

In an example, the whitelist may be obtained by the smart speaker 113 from the wireless router 145 connected to the smart speaker 113. The smart speaker 113 accesses a wireless network through the wireless router 145. For example, if Xiao Ming or a family member of Xiao Ming uses a respective device such as a mobile phone to access the network through the wireless network, Xiao Ming or the family member of Xiao Ming connects the respective mobile phone to the wireless network through the wireless router 145. When the mobile phone successfully accesses the network through the wireless router 145, the wireless router 145 may record information such as an identifier of the mobile phone, for example, a MAC address. Therefore, the wireless router 145 may add information about one or more devices that successfully access the wireless router 145 to the whitelist.

For example, when receiving the information about the mobile phone 2, the smart speaker 113 may obtain the whitelist from the wireless router 145. In this embodiment of this application, after obtaining the whitelist, the smart speaker 113 may store the whitelist. In this way, when information about another device is subsequently received, the process of obtaining the whitelist from the wireless router 145 is omitted. Alternatively, in this embodiment of this application, after obtaining the whitelist, the smart speaker 113 may not store the whitelist. In this way, memory occupation of the smart speaker 113 can be reduced. Alternatively, the smart speaker 113 may periodically request the whitelist from the wireless router 145. Alternatively, the smart speaker 113 may request the whitelist from the wireless router 145 in response to an operation of the user, where the operation of the user may be triggered by the user through the smart speaker 113, the wireless router 145, the mobile terminal device, or another device.

In an actual process, the whitelist may be updated. Therefore, after determining that the whitelist is updated, the wireless router 145 may send an updated whitelist to the smart speaker 113 in time. For example, the whitelist records information about a mobile phone A and about a mobile phone B. Xiao Ming buys a new device X, and the device X accesses the wireless network through the wireless router 145. In this case, the wireless router 145 may also add information about the device X to the whitelist. Therefore, an updated whitelist includes the information about the mobile phone A and about the mobile phone B, and the information about the device X.

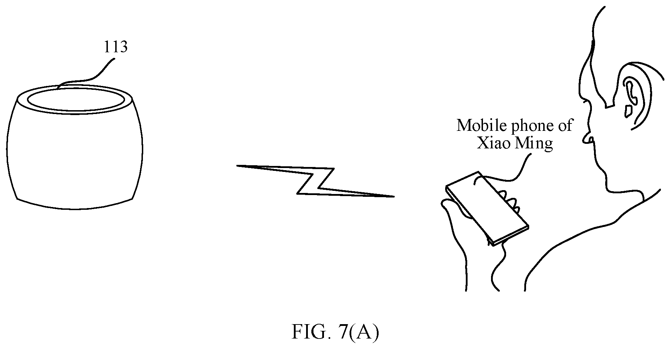

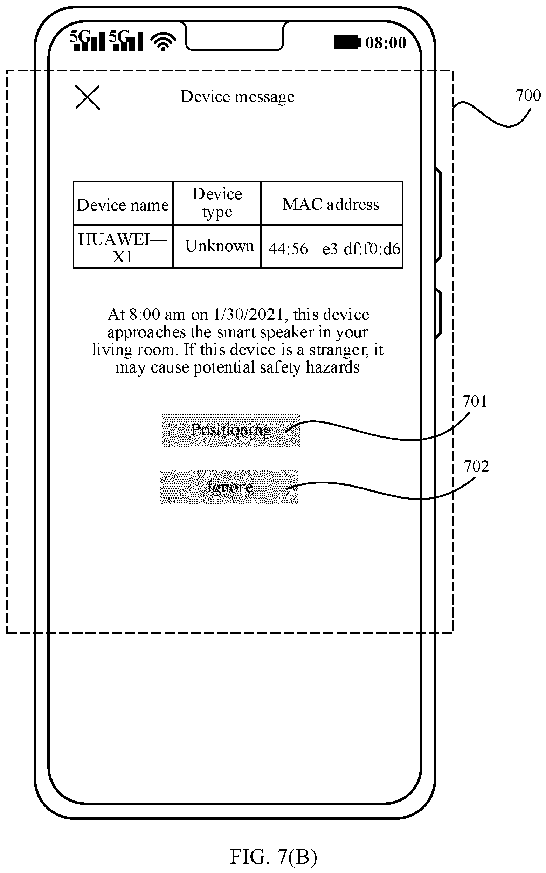

For example, in another scenario of this application, the smart speaker 113 is deployed in the home of Xiao Ming. If Xiao Ming or a family member of Xiao Ming is at home, and a friend (for example, Xiao Hua) of Xiao Ming comes to visit the home, because information about a mobile phone 3 of Xiao Hua is not recorded in the whitelist, the smart speaker 113 determines to locate the mobile phone 3 of Xiao Hua based on the foregoing solution. However, because Xiao Ming or the family member of Xiao Ming is at home, if the smart speaker 113 is used to locate the mobile phone 3 in this case, unnecessary troubles are caused. Based on this, according to the method provided in this embodiment of this application, when the smart speaker 113 determines that the information about the mobile phone 3 is not recorded in the whitelist, as shown in FIG. 7(A), the smart speaker 113 may send prompt information to the mobile phone 1 of Xiao Ming. The prompt information is for prompting whether to locate the mobile phone 3. After the mobile phone 1 receives the prompt information, as shown in FIG. 7 (B), the mobile phone 1 displays a prompt box 700. The prompt box 700 is for prompting whether to locate the mobile phone 3. If the mobile phone 1 detects an operation (for example, a control 701 is triggered) that is triggered by the user and that indicates to locate the mobile phone 3, the mobile phone 1 sends a response message 1 (a first operation instruction) to the smart speaker 113 in the living room. The response message 1 indicates to locate the mobile phone 3. In this case, the smart speaker 113 in the living room may determine, based on the response message 1, to locate the mobile phone 3. If the mobile phone 1 detects an operation (for example, a control 702 is triggered) that is triggered by the user and indicates not to locate the mobile phone 3, the mobile phone 1 sends a response message 2 to the smart speaker 113. The response message 2 indicates not to locate the mobile phone 3. In this case, the smart speaker 113 may determine, based on the response message 2, not to locate the mobile phone 3.

It should be noted that, in FIG. 7(A) and FIG. 7(B), that the prompt information on the mobile phone 1 is in a form of a prompt box is used as an example. In an actual process, the prompt information on the mobile phone 1 may alternatively be in another form, for example, a prompt box + vibration manner or a prompt box + voice manner. This is not limited in embodiments of this application.

It is assumed that the mobile phone 1 receives the prompt information. However, in this embodiment of this application, if Xiao Ming does not view information on the mobile phone 1 in time, and the mobile phone 1 determines that the control 701 is not detected to be triggered within a specified time period (for example, 5 seconds or 3 seconds), the mobile phone 1 performs, by default, the step of sending the response message 1 to the smart speaker 113.

In application scenarios of some embodiments provided in this application, after receiving the information about the mobile phone 2, the smart speaker 113 may not perform the process of determining whether the information about the mobile phone 2 is in the whitelist, but perform the foregoing process of sending the prompt information to the mobile phone 1 of Xiao Ming. In this way, when receiving a second operation instruction sent by the mobile phone 1, the smart speaker 113 may determine to locate the mobile phone 3. For a specific process in which the smart speaker 113 determines whether to locate the mobile phone 2, refer to the descriptions in FIG. 7(A) and FIG. 7(B). Details are not described herein again.

In application scenarios of some embodiments provided in this application, if determining that the identifier of the mobile phone 2 received within the set home leave time period does not belong to the whitelist, the smart speaker 113 determines to locate the mobile phone 2.

In application scenarios of some embodiments provided in this application, the smart speaker 113 does not locate the device when the home owner is at home, and the smart speaker 113 locates the device when the home owner is not at home (for example, the home owner is in the home leave mode or the smart device determines that the home owner is not at home). Optionally, whether the home owner is at home may be determined based on a preset time period during which the home owner is away from home/at home, or may be determined based on whether the mobile terminal device of the home owner accesses the network through the wireless access device in the home.

In some embodiments of this application, when the smart speaker 113 determines to locate the mobile phone 2, as shown in FIG. 6A, the smart speaker 113 determines a first RSSI of the mobile phone 2 that is measured when an antenna structure of the smart speaker 113 works at a first transmission distance.

Optionally, proximity discovery between the mobile phone and the smart device may be implemented through RSSI ranging. A distance r between the mobile phone and the smart device 10 is in inverse proportion to an RSSI. A larger RSSI may indicate a smaller distance between the mobile phone and the smart device 10. A smaller RSSI may indicate a larger distance between the mobile phone and the smart device 10.

The first RSSI is signal strength of the mobile phone 2 that is measured by the smart speaker 113 through the antenna structure when a radio signal transmission distance of the antenna structure is the first transmission distance. The first RSSI is for determining a distance between a signal receiving point (for example, the smart speaker 113) and a signal measurement point (the mobile phone 2).

In an example, a received strength parameter in this embodiment of this application may be an RSSI. The signal strength may be measured in dB. For example, the first RSSI may be -55 dB.

In some embodiments, the smart speaker 113 sends a radio signal to the mobile phone 2 through the antenna 1. After receiving the radio signal, the mobile phone 2 sends a feedback message to the smart speaker 113 in response to the radio signal. In this way, the smart speaker 113 may receive the feedback message from the mobile phone 2 through the antenna 1. The smart speaker 113 then calculates the first RSSI of the mobile phone 2 based on the received feedback message of the mobile phone 2. Certainly, in some embodiments of this application, the mobile phone 2 may send the radio signal at any time. In this way, the smart device 113 may determine the first RSSI of the mobile phone 2 based on the received radio signal from the mobile phone 2.

It should be noted that, the smart speaker 113 in this embodiment of this application has the antenna structure. The radio signal transmission distance of the antenna structure may include a first transmission distance and a second transmission distance. The first transmission distance is less than the second transmission distance.

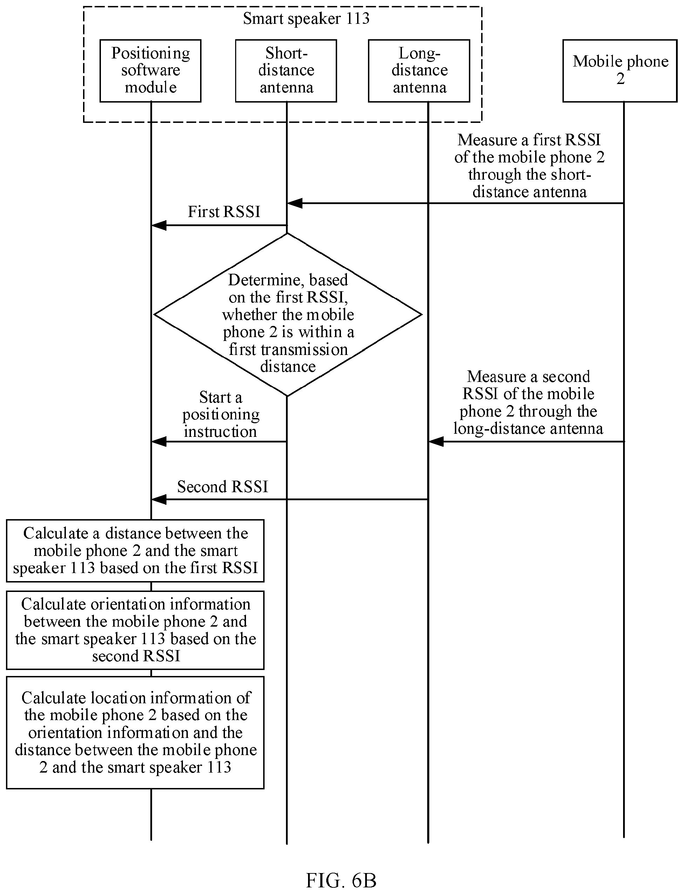

For example, the antenna structure includes an antenna 1 and an antenna 2 that are independently deployed. In this case, the smart speaker 113 controls the antenna 1 to send, to the mobile phone 2, a radio signal 1 for measuring the first RSSI. The mobile phone 2 sends a feedback message 1 to the smart speaker 113 in response to the radio signal 1, so that the smart speaker 113 can measure the first RSSI of the mobile phone 2, as shown in FIG. 6B. Optionally, the smart speaker 113 may determine, based on the first RSSI, whether the mobile phone 2 is located within the first transmission distance. Subsequently, if the smart speaker 113 needs to measure a second RSSI through the antenna 2, the smart speaker 113 sends a radio signal 2 through the antenna 2, and the mobile phone 2 sends a feedback message 2 to the smart speaker 113 in response to the radio signal 2. In this way, the smart speaker 113 can measure the second RSSI of the mobile phone 2, as shown in FIG. 6B. Optionally, the antenna 1 may be a short-distance antenna, and the antenna 2 may be a long-distance antenna.

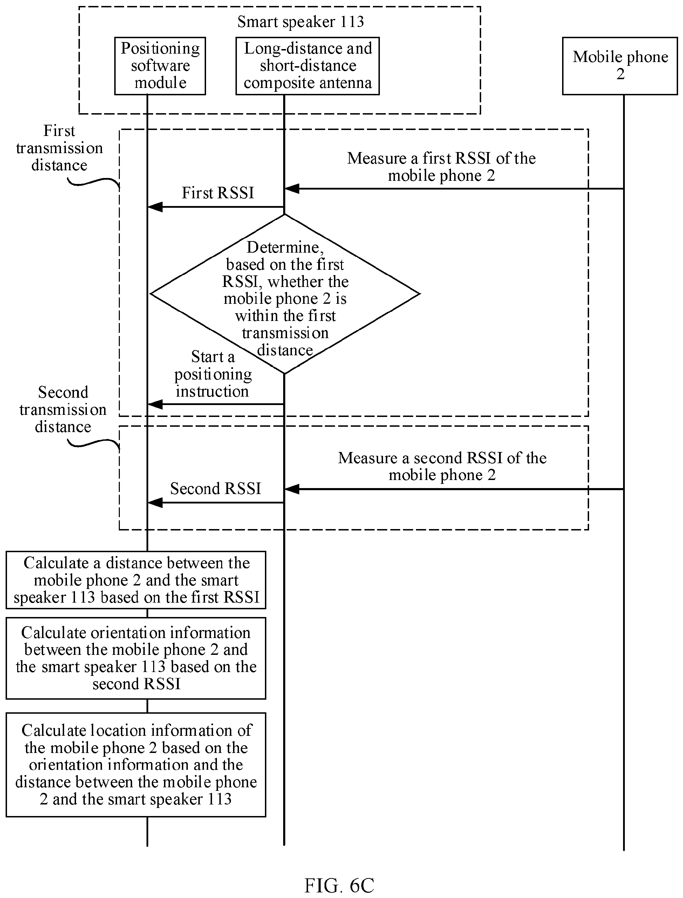

If the antenna structure is a single-antenna structure, in other words, the smart speaker 113 includes a long-distance and short-distance composite antenna, the long-distance and short-distance composite antenna may transmit a radio signal at the first transmission distance, and may also transmit a radio signal at the second transmission distance. In this case, the smart speaker 113 first controls the long-distance and short-distance composite antenna to transmit the radio signal 1 at the first transmission distance, and then calculates the first RSSI of the mobile phone 2 based on the received feedback message 1 that is fed back by the mobile phone 2 in response to the radio signal 1. When it is determined that the first RSSI indicates that the mobile phone 2 is located within the first transmission distance, it indicates that the mobile phone 2 is located within the monitoring range of the smart speaker 113, and the smart speaker 113 controls the long-distance and short-distance composite antenna of the smart speaker 113 to switch from the first transmission distance to the second transmission distance to transmit the radio signal 2, to receive the feedback message 2 that is fed back by the mobile phone 2 based on the radio signal 2. The smart speaker 113 then calculates the second RSSI of the mobile phone 2 based on the feedback message 2, as shown in FIG. 6C.

In some embodiments of this application, when the smart speaker 113 includes a long-distance and short-distance composite antenna, if the smart speaker 113 determines that the measured first RSSI of the mobile phone 2 indicates that the mobile phone 2 is not within the first transmission distance, the smart speaker 113 continues to work at the first transmission distance to measure the first RSSI of the mobile phone 2, or the smart speaker 113 periodically switches, according to a preset periodicity n, the long-distance and short-distance composite antenna to work at different transmission distances.

In some embodiments of this application, when the antenna structure works at the first transmission distance, the smart speaker 113 periodically sends the radio signal 1 through the antenna structure, and then the smart speaker 113 calculates the first RSSI based on the feedback message 1 obtained through periodic scanning (or receiving). For example, the periodicity may be T1. In other words, the smart speaker 113 cyclically calculates the first RSSI by using T1 as a periodicity based on the feedback message 1 obtained through scanning. In each periodicity T1, the smart speaker 113 calculates the first RSSI based on the feedback message 1 obtained through scanning. For a specific manner of calculating the first RSSI, refer to a current technology. Details are not described herein.

An example in which the first RSSI is an RSSI1 is used. In each periodicity T1, the smart speaker 113 may obtain an RSSI1 through calculation based on the feedback message 1 scanned by the antenna 1 or the long-distance and short-distance composite antenna that works at the first transmission distance. The smart speaker 113 may calculate an average value of RSSI1s corresponding to all T1s in preset duration 2, to obtain an RSSI1 corresponding to the antenna 1 or the long-distance and short-distance composite antenna that works at the first transmission distance in the preset duration 2. Alternatively, the smart speaker 113 may calculate a largest value of the RSSI1s corresponding to all T1s in the preset duration 2, to obtain the RSSI1 corresponding to the antenna 1 or the long-distance and short-distance composite antenna that works at the first transmission distance in the preset duration 2. Alternatively, the smart speaker 113 may perform other fusion calculation on the RSSI1s corresponding to all T1s in the preset duration 2, to obtain the RSSI1 corresponding to the antenna 1 or the single antenna that works at the first transmission distance in the preset duration 2. Similarly, the smart speaker 113 may obtain an RSSI2 corresponding to the antenna 2 or the long-distance and short-distance composite antenna that works at the second transmission distance in preset duration 3.

When the smart speaker 113 measures the first RSSI, as shown in FIG. 6A, the smart speaker 113 determines, based on the first RSSI of the mobile phone 2, whether the mobile phone 2 is located within the first transmission distance.

The smart speaker 113 has a preset received strength parameter 1, and the preset received strength parameter 1 corresponds to a preset distance 1. The smart speaker 113 may determine, based on a value relationship between the first RSSI and the preset received strength parameter 1, whether the mobile phone 2 is located within the first transmission distance. The preset distance 1 may be the first transmission distance. In other words, the preset received strength parameter 1 is a critical preset received strength parameter when the smart speaker 113 works at the first transmission distance.

For example, the first RSSI is the RSSI1. If an RSSI1 obtained by the smart speaker 113 through calculation in the current periodicity T1 is less than the preset received strength parameter 1, it may indicate that a distance between the mobile phone 2 and the smart speaker 113 is greater than the preset distance 1, and the mobile phone is far from the smart speaker 113. In this case, the smart speaker 113 continues to calculate an RSSI1 corresponding to the mobile phone 2 in a next periodicity T1.

If the RSSI1 obtained by the smart speaker 113 through calculation in the current periodicity T1 is greater than or equal to a preset threshold 1, the mobile phone may determine that the distance between the mobile phone 2 and the smart speaker 113 is less than or equal to the preset distance 1, and the mobile phone 2 is close to the smart speaker 113. In other words, the mobile phone 2 is located within the first transmission distance of the smart speaker 113.

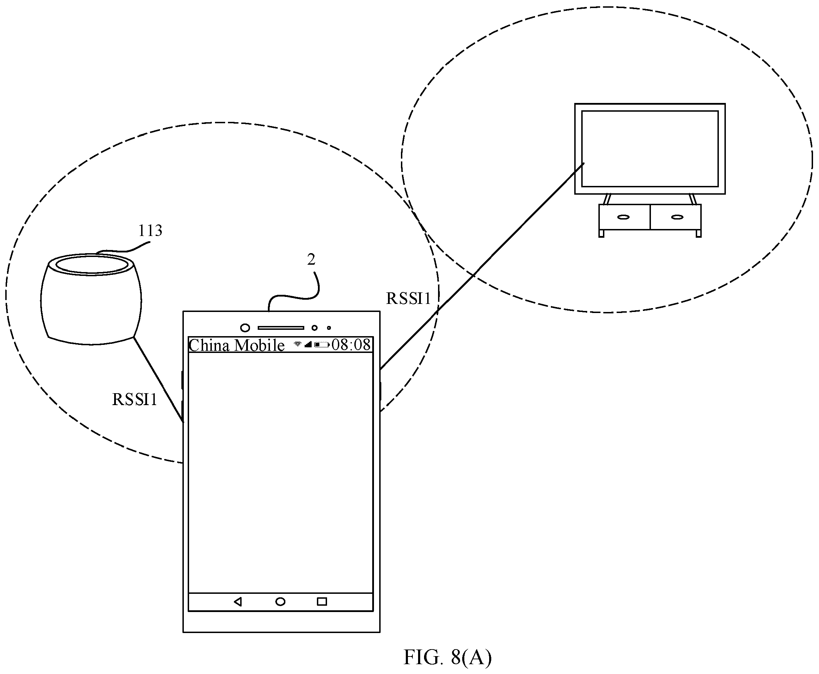

It should be noted that, both the smart television 111 and the smart speaker 113 may be selected by the user as monitoring points, and the smart television 111 and the smart speaker 113 are located at different locations. As shown in FIG. 8(A), a coverage range of the smart television 111 is 3 m, and a coverage range of the smart speaker 113 is 2 m. In this case, if the mobile phone 2 is closer to the smart speaker 113 in the smart television 111 and the smart speaker 113, both the smart speaker 113 and the smart television 111 may measure the first RSSI of the mobile phone 2 through respective antenna structures. It is assumed that the first RSSI of the mobile phone 2 measured by the smart speaker 113 is -55 dB. However, the first RSSI of the mobile phone 2 measured by the smart television 111 is -85 dB. The smart speaker 113 determines, based on the first RSSI being -55 dB, that the mobile phone 2 is located within the first transmission distance of the smart speaker 113. The smart television 111 determines, based on the first RSSI being -85 dB, that the mobile phone 2 is not located within the first transmission distance of the smart television 111. When the mobile phone 2 is not located within the first transmission distance of the smart television 111, the smart television 111 does not start the positioning software module of the smart television 111, but continues to perform a process of measuring a first received strength parameter of the mobile phone 2. This is because the mobile phone 2 may be in a moving state, and a location of the mobile phone keeps changing. Therefore, when the smart television 111 sends a radio signal to the mobile phone 2, strength of feedback messages sent by the mobile phone 2 to the smart television 111 at different locations is generally different. In this way, the smart television 111 may determine first RSSIs of the mobile phone 2 at different locations based on the feedback messages fed back by the mobile phone 2 at different locations.

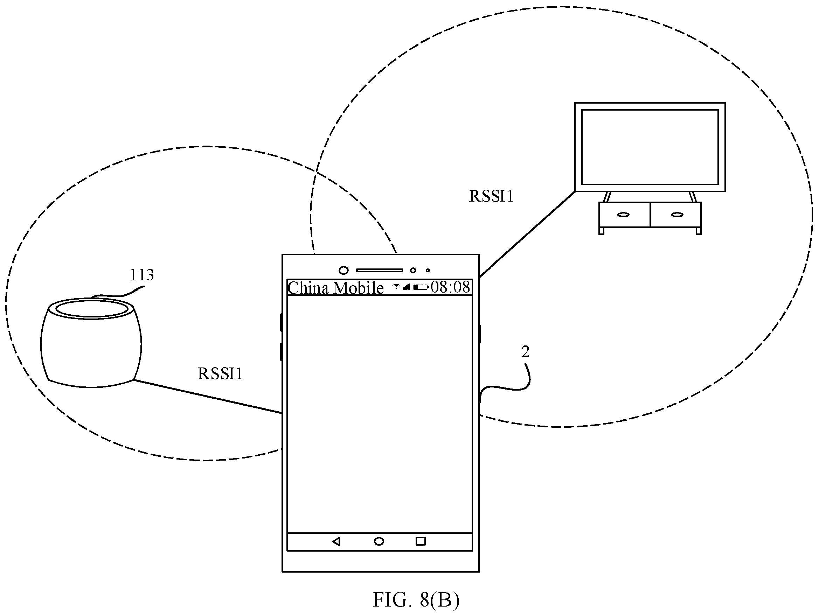

As shown in FIG. 8(B), if the mobile phone 2 is located between the smart television 111 and the smart speaker 113, both the smart speaker 113 and the smart television 111 may measure the first RSSI of the mobile phone 2 through respective antenna structures. It is assumed that the first RSSI of the mobile phone 2 measured by the smart speaker 113 is -55 dB. However, the first RSSI of the mobile phone 2 measured by the smart television 111 is -65 dB. The smart speaker 113 determines, based on the first RSSI being -55 dB, that the mobile phone 2 is located within the first transmission distance of the smart speaker 113. The smart television 111 determines, based on the first RSSI being -65 dB, that the mobile phone 2 is also located within the first transmission distance of the smart television 111. In this case, both the smart television 111 and the smart speaker 113 may start respective positioning software modules, to prepare to calculate a location of the mobile phone 2.

In some embodiments of this application, when the smart speaker 113 determines, based on the first RSSI of the mobile phone 2, that the mobile phone 2 is close to the smart speaker 113 (in other words, the mobile phone 2 is located within the first transmission distance of the smart speaker 113), as shown in FIG. 6A, the method provided in this embodiment of this application further includes: The smart speaker 113 determines the second RSSI of the mobile phone 2 that is measured by the antenna 2 of the smart speaker 113. Alternatively, as shown in FIG. 6B, the smart speaker 113 switches the long-distance and short-distance composite antenna of the smart speaker 113 from the first transmission distance to the second transmission distance, to measure the second RSSI of the mobile phone 2.

Case (1): The antenna structure includes an antenna 1 (or referred to as a short-distance antenna) and an antenna 2 (or referred to as a long-distance antenna) that are independently deployed. A radio signal transmission distance of the antenna 1 is the first transmission distance, and a radio signal transmission distance of the antenna 2 is the second transmission distance. The antenna 1 and the antenna 2 may be Bluetooth antennas or WLAN antennas.

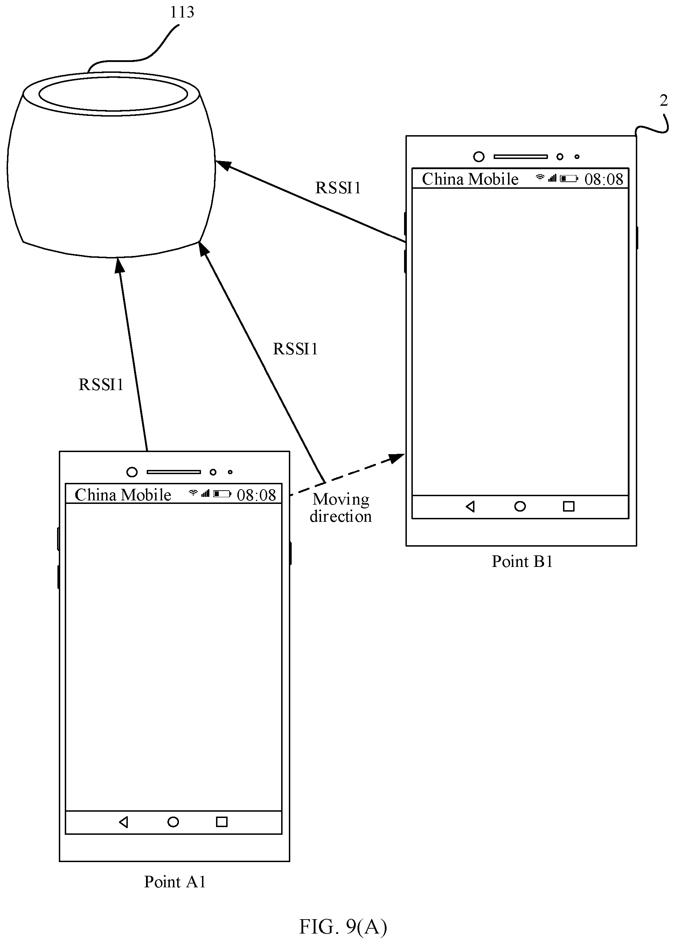

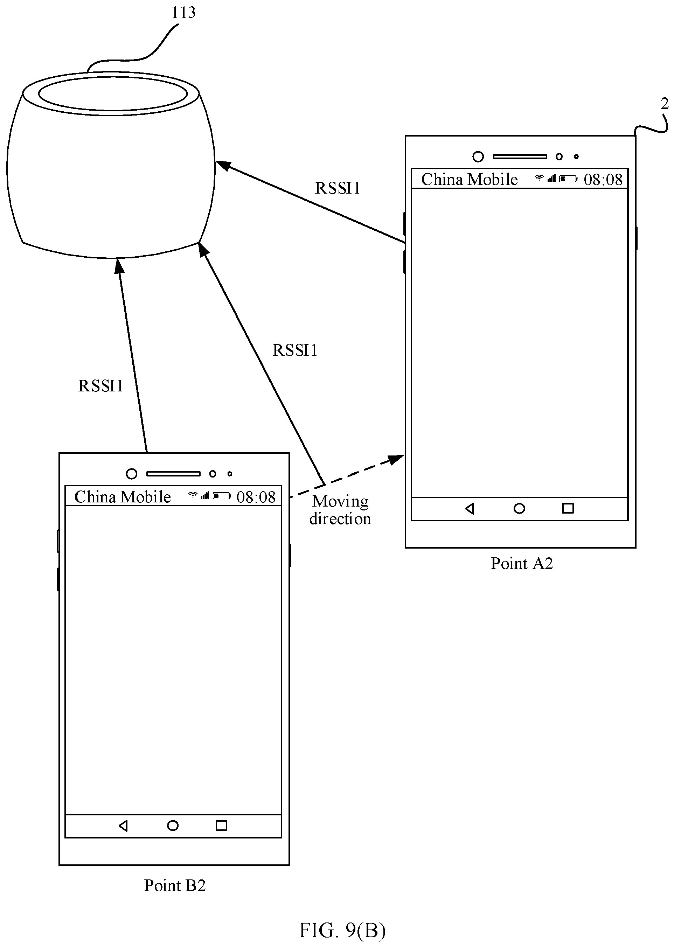

In case (1), the smart speaker 113 may control the antenna 1 and the antenna 2 to be in a working state simultaneously. The antenna 1 measures the first RSSI of the mobile phone 2. The antenna 2 measures the second RSSI of the mobile phone 2. The antenna 1 and the antenna 2 respectively report the first RSSI and the second RSSI that are measured in the current periodicity to the positioning software module of the smart speaker 113. In addition, when reporting a measured RSSI, each antenna may further report a time point corresponding to the RSSI. Because the mobile phone 2 may be in the moving state relative to the smart speaker 113, in a process in which the mobile phone 2 moves, first RSSIs measured by the antenna 1 when the mobile phone 2 is at different locations also keep changing. For example, if the mobile phone 2 moves away from the smart speaker 113, as shown in FIG. 9(A), the mobile phone 2 moves from a point A1 to a point B1, the first RSSI of the mobile phone 2 measured by the smart speaker 113 gradually decreases (for example, the first RSSI of the mobile phone 2 changes from -35 dB to -45 dB and then to -65 dB). If the mobile phone 2 moves towards the smart speaker 113, as shown in FIG. 9(B), the mobile phone 2 moves from a point A2 to a point B2, the first RSSI of the mobile phone 2 measured by the smart speaker 113 gradually increases (for example, the first RSSI of the mobile phone 2 changes from -65 dB to -55 dB and then to -45 dB). In whichever case, the antenna 1 may report the first RSSI of the mobile phone 2 that is measured in real time to the positioning software module. When a processor in the smart speaker 113 or a smart home cloud determines, based on the first RSSI of the mobile phone 2 measured by the antenna 1, that the mobile phone 2 is located within the coverage range of the antenna 1, the processor in the smart speaker 113 or the smart home cloud sends a start instruction to the positioning software module of the smart speaker 113, where the start instruction is for triggering the positioning software module to calculate a location of the mobile phone 2 relative to the smart speaker 113 based on signal strength of the mobile phone 2. The positioning software module of the smart speaker 113 then calculates the location of the mobile phone 2 relative to the smart speaker 113 based on RSSIs of the mobile phone 2 that are reported by the antenna 1 and the antenna 2 in a recent period of time. For example, the location of the mobile phone 2 relative to the smart speaker 113 may be calculated by the positioning software module of the smart speaker 113 based on a recently reported RSSI, or by the smart speaker 113 based on an average value of the RSSIs reported in the recent period of time.

It should be noted that, when the positioning software module is started, the positioning software module may invoke an algorithm stored in the smart speaker 113 to calculate the location of the mobile phone 2 relative to the smart speaker 113 based on the RSSIs of the mobile phone 2 that are reported by the antenna 1 and the antenna 2 in the recent period of time. Alternatively, the smart speaker 113 may send, to the smart home cloud, the first RSSI of the mobile phone 2 that is reported by the antenna 1 in the recent period of time and the second RSSI of the mobile phone 2 that is reported by the antenna 2 in the recent period of time, so that the smart home cloud calculates the location of the mobile phone 2 relative to the smart speaker 113 based on the first RSSI of the mobile phone 2 and the second RSSI of the mobile phone 2. After calculating the location of the mobile phone 2 relative to the smart speaker 113, the smart home cloud may feed back the location of the mobile phone 2 relative to the smart speaker 113 to the smart speaker 113.

In another example, in this embodiment of this application, the antenna 1 is always in the working state, and whether to start the antenna 2 to measure the second RSSI of the mobile phone 2 is determined based on the first RSSI. For example, the smart speaker 113 measures the first RSSI of the mobile phone 2 through the antenna 1, and the smart speaker 113 triggers the antenna 2 to start to send the radio signal 2 when the smart speaker 113 determines, based on the first RSSI, that the mobile phone 2 is located within the first transmission distance of the antenna 1, to measure the second RSSI of the mobile phone 2 through the antenna 2. The antenna 2 sends the measured second RSSI of the mobile phone 2 to the positioning software module of the smart speaker 113. Subsequently, the positioning software module of the smart speaker 113 calculates the location of the mobile phone 2 relative to the smart speaker 113 based on the first RSSI and the second RSSI of the mobile phone 2 that are respectively reported by the antenna 1 and the antenna 2 in the recent period of time.

In some embodiments of this application, an example in which the smart device 10 is the smart speaker 113 is used. The smart speaker 113 has a positioning software module, and the positioning software module is configured to calculate location information of a to-be-located device (for example, the mobile phone 2). When the smart speaker 113 determines, based on the first RSSI, that the mobile phone 2 is located within the first transmission distance, the smart speaker 113 starts the positioning software module. When the smart speaker 113 determines, based on the first RSSI, that the mobile phone 2 is not located within the first transmission distance, the smart speaker 113 does not start the positioning software module.

Certainly, the positioning software module in the smart speaker 113 may alternatively be in the started state by default. For example, when the smart speaker 113 is delivered from a factory, the positioning software module in the smart speaker 113 is set to the started state by a manufacturer. In this way, a process in which the smart speaker 113 starts the positioning software module when the smart speaker 113 determines, based on the first RSSI, that the mobile phone 2 is located within the first transmission distance is omitted.

In some embodiments of this application, when the positioning software module is in the started state, the smart speaker 113 may alternatively switch off the positioning software module. For example, a manner in which the smart speaker 113 switches off the positioning software module may be implemented in the following manner: The smart speaker 113 detects that the mobile phone 2 is located beyond the first transmission distance, or the smart speaker 113 does not detect the first RSSI of the mobile phone 2 within a preset time period, or the smart speaker 113 detects that a time period in which the mobile phone 2 is located beyond the first transmission distance exceeds preset duration, or the smart speaker 113 detects an instruction triggered by the user to switch off the positioning software module.

Case (2): The antenna structure includes a long-distance and short-distance composite antenna. The long-distance and short-distance composite antenna may work at both the first transmission distance and the second transmission distance. In other words, the antenna structure is a single-antenna structure.

In case (2), the smart speaker 113 first controls the long-distance and short-distance composite antenna of the smart speaker 113 to be at the first transmission distance, and then the smart speaker 113 measures the RSSI1 of the mobile phone 2 in real time when the long-distance and short-distance composite antenna is at the first transmission distance. The long-distance and short-distance composite antenna at the first transmission distance reports the RSSI1 to the positioning software module. When determining that the mobile phone 2 is located within the first transmission distance, the smart speaker 113 then sends a start instruction to the positioning software module, where the start instruction is for triggering the positioning software module to calculate the location of the mobile phone 2 relative to the smart speaker 113 based on signal strength of the mobile phone 2. If the smart speaker 113 determines, based on the measured RSSI1 of the mobile phone 2, that the mobile phone 2 is located within the first transmission distance of the smart speaker 113, the smart speaker 113 may switch a radio signal transmission distance of the long-distance and short-distance composite antenna from the first transmission distance to the second transmission distance, and measure the RSSI2 of the mobile phone 2 when the single antenna works at the second transmission distance. The long-distance and short-distance composite antenna then reports the RSSI2 of the mobile phone 2 that is measured when the antenna works at the second transmission distance to the positioning software module.

In some embodiments of this application, in case 2, when the smart speaker 113 controls the long-distance and short-distance composite antenna to switch from the first transmission distance to the second transmission distance, after the smart speaker 113 measures the second RSSI through the long-distance and short-distance composite antenna, the smart speaker 113 controls the single antenna to work again at the first transmission distance. Alternatively, after the smart speaker 113 measures a second received strength parameter through the single antenna, and after a preset periodicity T2 (for example, 2 seconds or 3 seconds), the smart speaker 113 controls the single antenna to work again at the first transmission distance. Alternatively, the smart speaker 113 controls the single antenna to alternately work at the first transmission distance and the second transmission distance. This is not limited in embodiments of this application.

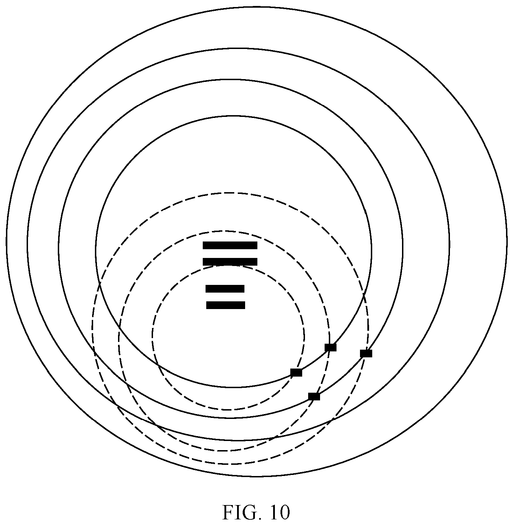

As shown in FIG. 10, an example in which the antenna 1 is a short-distance antenna and the antenna 2 is a long-distance antenna is used. Signals sent by the short-distance antenna are circles formed by dashed lines. Strength of signals sent by the long-distance antenna is circles formed by solid lines. It can be seen from FIG. 10 that there are a plurality of intersection points between transmission distances of the antenna 1 and the antenna 2.

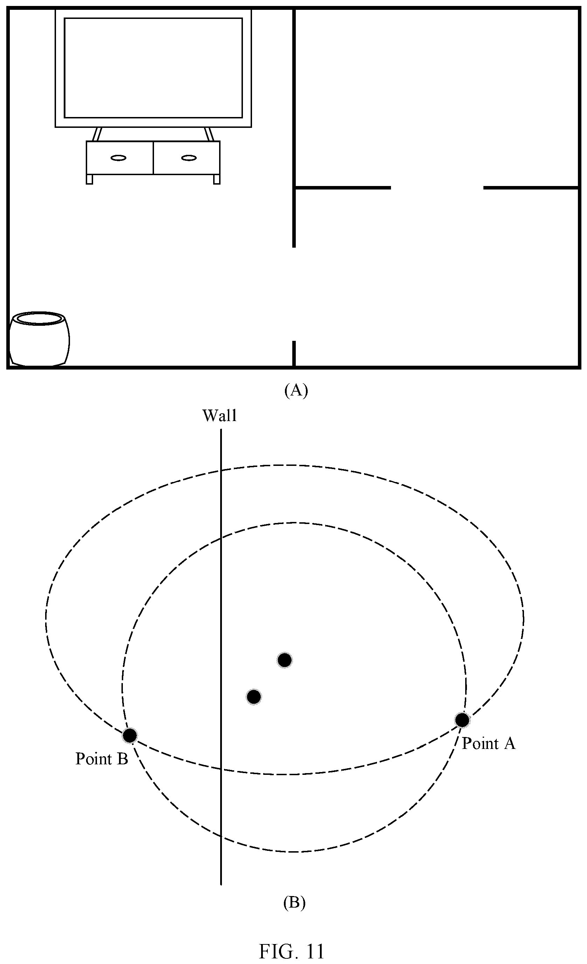

As shown in (A) of FIG. 11, an example in which the smart device 10 is the smart speaker 113 is used. The smart speaker 113 determines, based on a range corresponding to the first received strength parameter of the antenna 1 and a range corresponding to the second received strength parameter of the antenna 2, that there are two intersection points between the antenna 1 and the antenna 2, for example, a point A and a point B. The smart speaker 113 may then exclude a back wall placement point, for example, the point B, based on a placement location of the smart speaker 113. Only point A is left. For example, as shown in (B) of FIG. 11, the smart speaker 113 determines that the smart speaker 113 is disposed against a wall, the point A and the point B are respectively located on two sides of the wall, the point A is located in the home area of the user, and the point B is not located in the home area of the user. Therefore, the smart speaker 113 excludes the point B, and reserves the point A.

When the smart speaker 113 obtains the first RSSI and the second RSSI of the mobile phone 2 at different transmission distances, as shown in FIG. 6A, the smart speaker 113 determines the location information of the mobile phone 2 based on the first RSSI and the second RSSI. The location information in this embodiment of this application may include one or more of information such as distance information, angle information, and direction information.

In some embodiments of this application, that the smart speaker 113 determines the location information of the mobile phone 2 based on the first RSSI and the second RSSI may be specifically implemented through a solution shown in FIG. 6B or FIG. 6C. For example, the location information of the mobile phone 2 includes the location of the mobile phone 2 relative to the smart speaker 113. For example, the mobile phone 2 is located in a northwest direction 45° of the smart speaker 113. In this case, that the smart speaker 113 determines the location information of the mobile phone 2 based on the first RSSI and the second RSSI includes: The positioning software module of the smart speaker 113 determines a distance between the mobile phone and the smart speaker 113 based on the first RSSI. The positioning software module of the smart speaker 113 determines an offset angle between the mobile phone 2 and the smart speaker 113 based on the second RSSI. The positioning software module of the smart speaker 113 determines the location of the mobile phone 2 relative to the smart speaker 113 based on the distance between the mobile phone 2 and the smart speaker 113 and the foregoing offset angle. If the first RSSI and the second RSSI are greater than (-55db, -63db), -55db is a signal critical value measured at 25 cm from the short-distance antenna, and -63db is a signal critical value measured at 32 cm from the long-distance antenna. For example, that the positioning software module of the smart speaker 113 determines the offset angle between the mobile phone 2 and the smart speaker 113 based on the second RSSI may be implemented in the following manner: The positioning software module of the smart speaker 113 determines the offset angle between the mobile phone 2 and the smart speaker 113 with reference to the first RSSI and the second RSSI. It may be noted that, the smart speaker 113 may not only obtain a distance between the mobile phone 2 and the smart speaker 113 through calculation based on the first RSSI, but also obtain a distance between the mobile phone 2 and the smart speaker 113 through calculation based on the second RSSI, and then calculate the offset angle between the mobile phone 2 and the smart speaker 113 based on the distance between the mobile phone 2 and the smart speaker 113 that is obtained through calculation based on the first RSSI and the distance between the mobile phone 2 and the smart speaker 113 that is obtained based on the second RSSI.

In some embodiments of this application, a plurality of smart devices may be deployed in an area. For example, as shown in FIG. 2, the smart television 111 and the smart speaker 113 are deployed in the living room, and the mobile phone 2 is located within the first transmission distances of both the smart television 111 and the smart speaker 113. In this case, the smart speaker 113 may measure a first RSSI and a second RSSI of the mobile phone 2 through the antenna structure of the smart speaker 113, and calculate a location of the mobile phone 2 relative to the smart speaker 113 based on the first RSSI and the second RSSI. Similarly, the smart television 111 may measure the first RSSI and the second RSSI of the mobile phone 2 through the antenna structure of the smart television 111, and calculate a location of the mobile phone 2 relative to the smart television 111 based on the first RSSI and the second signal RSSI that are of the mobile phone 2 and that are measured by the smart television 111.

In some embodiments of this application, an example in which the smart device 10 is the smart speaker 113 is still used. After the smart speaker 113 determines the location information of the mobile phone 2, the smart speaker 113 may send the location information of the mobile phone 2 to a smart monitoring device in the living room. After receiving the location information of the mobile phone 2, the smart monitoring device in the living room may adjust a camera of the smart monitoring device in the living room based on the location information of the mobile phone 2, so that the camera of the smart monitoring device in the living room faces a location of the mobile phone 2. In this way, linkage between a plurality of smart devices can be implemented. An objective for the smart speaker 113 to send the location information of the mobile phone 2 to the smart monitoring device in the living room is as follows: At a current moment, the mobile phone 2 may be located within the coverage range of the antenna 1 of the smart speaker 113, but is not located within a coverage range of an antenna 1 of the smart monitoring device in the living room. Therefore, the smart monitoring device in the living room cannot calculate the location information of the mobile phone 2. If the smart monitoring device in the living room is configured to periodically adjust an orientation of the camera of the smart monitoring device in the living room, or the camera of the smart monitoring device in the living room is configured to be fixedly oriented towards a location, at a moment, a case in which the camera of the smart monitoring device in the living room does not face the location of the mobile phone 2 may exist. Therefore, the smart monitoring device in the living room obtains the location information of the mobile phone 2 from the smart speaker 113, and adjusts the camera orientation based on the location information of the mobile phone 2, so that a video or an image of the user corresponding to the mobile phone 2 can be accurately acquired. Optionally, the smart monitoring device may be a pan-tilt-zoom camera, an infrared camera, or a camera in an electronic device such as a large-screen device, or may be a sensing device such as a lidar, a millimeter-wave radar, or an ultra-wideband (ultra-wideband, UWB) positioning device.

For example, the smart speaker 113 may send the location information of the mobile phone 2 in a broadcast manner, or specifically send the location information of the mobile phone 2 to the smart monitoring device in the living room, or send the location information of the mobile phone 2 to the wireless router 145, and the wireless router 145 further sends the location information of the mobile phone 2 to another device. This is not limited in embodiments of this application.

In some embodiments of this application, for example, the smart device 10 is the smart television 111. It is assumed that the smart television 111 has a camera. After the smart television 111 determines a location of the mobile phone 2, the smart television 111 may control the camera based on the location information of the mobile phone 2, so that the camera faces the mobile phone 2. After the camera faces the mobile phone 2, the smart television 111 may control the camera to acquire a video or an image of the user corresponding to the mobile phone 2. The smart television 111 may store the acquired video or image in the smart television 111, or upload the acquired video or image to a cloud server connected to the smart television 111, or send the acquired video or image to another device. This is not limited in embodiments of this application.

It should be noted that, because the mobile phone 2 may be in the moving state, and relative locations between the mobile phone 2 and the smart television 111 are different at different moments, the smart television 111 needs to adjust an angle of the camera in time based on the relative locations between the mobile phone 2 and the smart television 111 at different moments, so that the camera faces the mobile phone 2. It is assumed that the mobile phone 2 is located in a northwest direction 45° of the smart television 111 at a moment 1, and the mobile phone 2 is located in a northwest direction 65° of the smart television 111 at a moment 2. In this case, the smart television 111 adjusts the camera to face the northwest direction 45° at the moment 1, and adjusts the camera to face the northwest direction 65° at the moment 2. Optionally, after obtaining location information of the mobile phone 2 at the moment 1, the smart television 111 may further control the camera through a target tracking algorithm, so that the camera tracks the user corresponding to the mobile phone 2 in real time. In this way, after the user corresponding to the mobile phone 2 is away from the smart television 111 (for example, the user is no longer located within the first transmission distance or the second transmission distance of the smart television 111), the smart television 111 can still control the camera to acquire video or image information of the user corresponding to the mobile phone 2.

In some embodiments of this application, an example in which the smart device 10 is the smart speaker 113 is still used. After the smart speaker 113 calculates the location of the mobile phone 2 relative to the smart speaker 113, the smart speaker 113 may send the location of the mobile phone 2 relative to the smart speaker 113 and/or alarm information to the mobile phone 1 of Xiao Ming through a specified App (for example, the AI Life App). The alarm information is for prompting that an unknown device approaches the smart device. Optionally, the unknown device may be a device carried by a suspicious person or a stranger (for example, a burglar) entering the home of Xiao Ming, so that the alarm information is for prompting the home owner that the suspicious person or the stranger enters the home. Optionally, the smart speaker 113 may send the location of the mobile phone 2 relative to the smart speaker 113 and/or the alarm information to the smart home cloud, so that the smart home cloud sends the location of the mobile phone 2 relative to the smart speaker 113 and/or the alarm information to the mobile phone 1 of Xiao Ming. Optionally, the mobile phone 1 of Xiao Ming may receive the location of the mobile phone 2 relative to the smart speaker 113 and/or alarm information through a specified App (for example, the AI Life App). Optionally, when the mobile phone 1 of Xiao Ming receives the location of the mobile phone 2 relative to the smart speaker 113 and/or alarm information, the mobile phone 1 of Xiao Ming may not be located in the home of Xiao Ming.

In some embodiments of this application, the smart device may determine the location information between the electronic device and the smart device based on the first received strength parameter, and/or may determine the location information between the electronic device and the smart device based on the second received strength parameter. The location information may include but is not limited to one or more of information such as a distance, an orientation, and an angle between the electronic device and the smart device.

In some embodiments of this application, the smart device may determine, based on the second RSSI, whether the mobile terminal device is located within the second transmission distance, and measure the first RSSI of the mobile terminal device through the antenna structure of the smart device.

In some embodiments of this application, the smart device may measure the location information of the mobile terminal device through a hardware apparatus. The foregoing sensor includes but is not limited to an ultra-wideband (ultra-wideband, UWB) antenna, an infrared sensor, an ultrasonic sensor, a millimeter-wave radar, a lidar, a thermal imaging apparatus, and the like.

It should be noted that, in the method provided in embodiments of this application, an implementation sequence of the steps is not limited, and a person skilled in the art may adjust the implementation sequence of the steps based on a specific requirement, or combine the steps in embodiments of this application to form an implementation method that can be applied, without going beyond the coverage scope of embodiments of this application.

An embodiment of this application further provides a computer storage medium. The computer storage medium may include computer instructions. When the computer instructions are run on a smart device (for example, the smart speaker 113 or the smart television 111), the smart device is enabled to perform the steps performed by the smart speaker 113 and the smart television 111 in the corresponding embodiments in FIG. 6A to FIG. 6C or in other embodiments of this application.

An embodiment of this application further provides a computer storage medium. The computer storage medium may include (namely, store) computer instructions. When the computer instructions are run on an electronic device (for example, the foregoing mobile phone 2), the smart device is enabled to perform the steps performed by the mobile phone 2 in the embodiments corresponding to FIG. 6A to FIG. 6C or in other embodiments of this application. The computer storage medium may alternatively be a computer-readable storage medium or a nonvolatile computer-readable storage medium.

An embodiment of this application further provides a computer program product, where when the computer program product is run on a computer, the computer is enabled to perform the steps performed by the smart speaker 113 and the smart television 111 in the embodiments corresponding to FIG. 6A to FIG. 6C or in other embodiments of this application.

An embodiment of this application further provides a computer program product. When the computer program product is run on a computer, the computer is enabled to perform the steps performed by the mobile phone 2 in the embodiments corresponding to FIG. 6A to FIG. 6C or in other embodiments of this application.

An embodiment of this application further provides an apparatus. The apparatus has a function of implementing the behavior of the smart devices (for example, the smart speaker 113 and the smart television 111) in the embodiments corresponding to FIG. 6A to FIG. 6C or in other embodiments of this application. The function may be implemented by hardware, or may be implemented by hardware executing corresponding software. The hardware or software includes one or more modules corresponding to the foregoing functions, for example, a receiving unit or module, a measurement unit or module, a determining unit or module, and a sending unit or module.

According to the description of the foregoing implementations, a person skilled in the art may clearly understand that, for the purpose of convenient and brief description, division into the foregoing functional modules is merely used as an example for description. In actual application, the foregoing functions may be allocated to different functional modules for implementation based on a requirement. In other words, an inner structure of an apparatus is divided into different functional modules, to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device location determining method, applied to a smart device having an antenna structure, wherein a radio signal transmission distance of the antenna structure comprises a first transmission distance and a second transmission distance, the first transmission distance is less than the second transmission distance, and the method comprises:
receiving information about a first electronic device from the first electronic device;
determining, when determining to locate the first electronic device based on the information about the first electronic device, a first received strength parameter that is of the first electronic device and that is measured when the antenna structure works at the first transmission distance;
determining, when the first received strength parameter indicates that the first electronic device is located within the first transmission distance, a second received strength parameter that is of the first electronic device and that is measured when the antenna structure works at the second transmission distance; and
determining location information of the first electronic device based on the first received strength parameter and the second received strength parameter.

2. The method according to claim 1, wherein the location information of the first electronic device comprises a location of the first electronic device relative to the smart device, and the determining location information of the first electronic device based on the first received strength parameter and the second received strength parameter comprises:
determining a distance between the first electronic device and the smart device based on the first received strength parameter;
determining orientation information between the first electronic device and the smart device based on the second received strength parameter; and
determining the location of the first electronic device relative to the smart device based on the distance and the orientation information.

3. The method according to claim 1 or 2, wherein before the receiving information about a first electronic device from the first electronic device, the method further comprises:
broadcasting a discovery message, wherein the discovery message is for requesting a device that receives the discovery message to report information about the device to the smart device.

4. The method according to any one of claims 1 to 3, wherein the smart device has a whitelist, the whitelist records information about one or more devices, and the case of determining to locate the first electronic device based on the information about the first electronic device further comprises:
a case in which the information about the first electronic device does not belong to the whitelist.

5. The method according to claim 4, wherein when the information about the first electronic device does not belong to the whitelist, the method further comprises:
sending the information about the first electronic device to a second electronic device;
receiving a first operation instruction from the second electronic device; and
determining to locate the first electronic device in response to the first operation instruction.

6. The method according to claim 4 or 5, wherein the smart device accesses a network through a wireless access device, and the method further comprises:
obtaining the whitelist from the wireless access device.

7. The method according to any one of claims 1 to 3, wherein the method further comprises:
sending the information about the first electronic device to a second electronic device;
receiving a second operation instruction from the second electronic device; and
determining to locate the first electronic device in response to the second operation instruction.

8. The method according to any one of claims 1 to 7, wherein the method further comprises:
starting a positioning software module of the smart device when the first received strength parameter indicates that the first electronic device is located within the first transmission distance, wherein the positioning software module is configured to calculate the location information of the first electronic device.

9. The method according to any one of claims 1 to 8, wherein the method further comprises:
receiving a third operation instruction; and
setting the radio signal transmission distance of the antenna structure in response to the third operation instruction.

10. The method according to any one of claims 1 to 9, wherein the antenna structure comprises a first antenna and a second antenna that are independently disposed, a radio signal transmission distance of the first antenna is the first transmission distance, and a radio signal transmission distance of the second antenna is the second transmission distance;
the determining a first received strength parameter that is of the first electronic device and that is measured when the antenna structure works at the first transmission distance comprises:
measuring the first received strength parameter of the first electronic device through the first antenna; and
the determining a second received strength parameter that is of the first electronic device and that is measured when the antenna structure works at the second transmission distance comprises:
measuring the second received strength parameter of the first electronic device through the second antenna.

11. The method according to any one of claims 1 to 9, wherein the antenna structure is a single-antenna structure;
the determining a first received strength parameter that is of the first electronic device and that is measured when the antenna structure works at the first transmission distance comprises:
controlling the antenna structure to work at the first transmission distance, to measure the first received strength parameter of the first electronic device through the antenna structure; and
the determining, when the first received strength parameter indicates that the first electronic device is located within the first transmission distance, a second received strength parameter that is of the first electronic device and that is measured when the antenna structure works at the second transmission distance comprises:
when the first received strength parameter indicates that the first electronic device is located within the first transmission distance, controlling the radio signal transmission distance of the antenna structure to switch from the first transmission distance to the second transmission distance, to measure the second received strength parameter of the first electronic device through the antenna structure.

12. The method according to any one of claims 1 to 11, wherein the smart device has a camera, and the method further comprises:
adjusting a photographing angle of the camera based on the location information of the first electronic device, so that the photographing angle of the camera is towards a location of the first electronic device.

13. The method according to any one of claims 1 to 12, wherein the method further comprises:
sending a prompt message to a second electronic device, wherein the prompt message comprises the location information of the first electronic device and/or alarm information, and the alarm information is for prompting that an unknown device or a suspicious person approaches the smart device.

14. A smart device, wherein the smart device has an antenna structure, a radio signal transmission distance of the antenna structure comprises a first transmission distance and a second transmission distance, the first transmission distance is less than the second transmission distance, and the smart device comprises one or more processors and a memory, wherein
the memory is coupled to the one or more processors, the memory is configured to store computer program code, the computer program code comprises computer instructions, and when the one or more processors execute the computer instructions, the smart device performs the device location determining method according to any one of claims 1 to 13.

15. A computer-readable storage medium, storing computer instructions, wherein when the computer instructions are run on a smart device, the smart device is enabled to perform the device location determining method according to any one of claims 1 to 13.

## Patentansprüche

1. Vorrichtungsstandortbestimmungsverfahren, das auf eine intelligente Vorrichtung mit einer Antennenstruktur angewendet wird, wobei eine Funksignalübertragungsdistanz der Antennenstruktur eine erste Übertragungsdistanz und eine zweite Übertragungsdistanz umfasst, wobei die erste Übertragungsdistanz kleiner als die zweite Übertragungsdistanz ist und das Verfahren Folgendes umfasst:
Empfangen von Informationen über eine erste elektronische Vorrichtung von der ersten elektronischen Vorrichtung;
Bestimmen, wenn bestimmt wird, die erste elektronische Vorrichtung basierend auf den Informationen über die erste elektronische Vorrichtung zu lokalisieren, eines ersten Empfangsstärkeparameters, der zu der ersten elektronischen Vorrichtung gehört und der gemessen wird, wenn die Antennenstruktur mit der ersten Übertragungsdistanz arbeitet;
Bestimmen, wenn der erste Empfangsstärkeparameter angibt, dass sich die erste elektronische Vorrichtung innerhalb der ersten Übertragungsdistanz befindet, eines zweiten Empfangsstärkeparameters, der zu der ersten elektronischen Vorrichtung gehört und der gemessen wird, wenn die Antennenstruktur mit der zweiten Übertragungsdistanz arbeitet; und
Bestimmen von Standortinformationen der ersten elektronischen Vorrichtung basierend auf dem ersten Empfangsstärkeparameter und dem zweiten Empfangsstärkeparameter.

2. Verfahren nach Anspruch 1, wobei die Standortinformationen der ersten elektronischen Vorrichtung einen Standort der ersten elektronischen Vorrichtung relativ zu der intelligenten Vorrichtung umfassen und das Bestimmen von Standortinformationen der ersten elektronischen Vorrichtung basierend auf dem ersten Empfangsstärkeparameter und dem zweiten Empfangsstärkeparameter Folgendes umfasst:
Bestimmen einer Distanz zwischen der ersten elektronischen Vorrichtung und der intelligenten Vorrichtung basierend auf dem ersten Empfangsstärkeparameter;
Bestimmen von Ausrichtungsinformationen zwischen der ersten elektronischen Vorrichtung und der intelligenten Vorrichtung basierend auf dem zweiten Empfangsstärkeparameter; und
Bestimmen des Standorts der ersten elektronischen Vorrichtung relativ zu der intelligenten Vorrichtung basierend auf der Distanz und den Ausrichtungsinformationen.

3. Verfahren nach Anspruch 1 oder 2, wobei das Verfahren vor dem Empfangen von Informationen über eine erste elektronische Vorrichtung von der ersten elektronischen Vorrichtung ferner Folgendes umfasst:
Rundsenden einer Entdeckungsnachricht, wobei die Entdeckungsnachricht dazu dient, eine Vorrichtung, die die Entdeckungsnachricht empfängt, dazu aufzufordern, Informationen über die Vorrichtung an die intelligente Vorrichtung zu melden.

4. Verfahren nach einem der Ansprüche 1 bis 3, wobei die intelligente Vorrichtung eine Whitelist aufweist, die Whitelist Informationen über eine oder mehrere Vorrichtungen aufzeichnet und der Fall des Bestimmens, die erste elektronische Vorrichtung basierend auf den Informationen über die erste elektronische Vorrichtung zu lokalisieren, ferner Folgendes umfasst:
einen Fall, in dem die Informationen über die erste elektronische Vorrichtung nicht zu der Whitelist gehören.

5. Verfahren nach Anspruch 4, wobei, wenn die Informationen über die erste elektronische Vorrichtung nicht zu der Whitelist gehören, das Verfahren ferner Folgendes umfasst:
Senden der Informationen über die erste elektronische Vorrichtung an eine zweite elektronische Vorrichtung;
Empfangen einer ersten Betriebsanweisung von der zweiten elektronischen Vorrichtung; und Bestimmen, die erste elektronische Vorrichtung zu lokalisieren, als Reaktion auf die erste Betriebsanweisung.

6. Verfahren nach Anspruch 4 oder 5, wobei die intelligente Vorrichtung über eine Drahtloszugriffsvorrichtung auf ein Netzwerk zugreift und das Verfahren ferner Folgendes umfasst:
Erhalten der Whitelist von der Drahtloszugriffsvorrichtung.

7. Verfahren nach einem der Ansprüche 1 bis 3, wobei das Verfahren ferner Folgendes umfasst:
Senden der Informationen über die erste elektronische Vorrichtung an eine zweite elektronische Vorrichtung;
Empfangen einer zweiten Betriebsanweisung von der zweiten elektronischen Vorrichtung; und
Bestimmen, die erste elektronische Vorrichtung zu lokalisieren, als Reaktion auf die zweite Betriebsanweisung.

8. Verfahren nach einem der Ansprüche 1 bis 7, wobei das Verfahren ferner Folgendes umfasst:
Starten eines Positionierungssoftwaremoduls der intelligenten Vorrichtung, wenn der erste Empfangsstärkeparameter angibt, dass sich die erste elektronische Vorrichtung innerhalb der ersten Übertragungsdistanz befindet, wobei das Positionierungssoftwaremodul dazu ausgelegt ist, die Positionsinformationen der ersten elektronischen Vorrichtung zu berechnen.

9. Verfahren nach einem der Ansprüche 1 bis 8, wobei das Verfahren ferner Folgendes umfasst:
Empfangen einer dritten Betriebsanweisung; und
Einstellen der Funksignalübertragungsdistanz der Antennenstruktur als Reaktion auf die dritte Betriebsanweisung.

10. Verfahren nach einem der Ansprüche 1 bis 9, wobei die Antennenstruktur eine erste Antenne und eine zweite Antenne umfasst, die unabhängig angeordnet sind, eine Funksignalübertragungsdistanz der ersten Antenne die erste Übertragungsdistanz ist und eine Funksignalübertragungsdistanz der zweiten Antenne die zweite Übertragungsdistanz ist;
das Bestimmen eines ersten Empfangsstärkeparameters, der zu der ersten elektronischen Vorrichtung gehört und der gemessen wird, wenn die Antennenstruktur mit der ersten Übertragungsdistanz arbeitet, Folgendes umfasst:
Messen des ersten Empfangsstärkeparameters der ersten elektronischen Vorrichtung durch die erste Antenne; und
das Bestimmen eines zweiten Empfangsstärkeparameters, der zu der ersten elektronischen Vorrichtung gehört und der gemessen wird, wenn die Antennenstruktur mit der zweiten Übertragungsdistanz arbeitet, Folgendes umfasst:
Messen des zweiten Empfangsstärkeparameters der ersten elektronischen Vorrichtung durch die zweite Antenne.

11. Verfahren nach einem der Ansprüche 1 bis 9, wobei die Antennenstruktur eine Einzelantennenstruktur ist;
das Bestimmen eines ersten Empfangsstärkeparameters, der zu der ersten elektronischen Vorrichtung gehört und der gemessen wird, wenn die Antennenstruktur mit der ersten Übertragungsdistanz arbeitet, Folgendes umfasst:
Steuern der Antennenstruktur zum Arbeiten mit der ersten Übertragungsdistanz, um den ersten Empfangsstärkeparameter der ersten elektronischen Vorrichtung durch die Antennenstruktur zu messen; und
das Bestimmen, wenn der erste Empfangsstärkeparameter angibt, dass sich die erste elektronische Vorrichtung innerhalb der ersten Übertragungsdistanz befindet, eines zweiten Empfangsstärkeparameters, der zu der ersten elektronischen Vorrichtung gehört und der gemessen wird, wenn die Antennenstruktur mit der zweiten Übertragungsdistanz arbeitet, Folgendes umfasst:
wenn der erste Empfangsstärkeparameter angibt, dass sich die erste elektronische Vorrichtung innerhalb der ersten Übertragungsdistanz befindet, Steuern der Funksignalübertragungsdistanz der Antennenstruktur zum Umschalten von der ersten Übertragungsdistanz zu der zweiten Übertragungsdistanz, um den zweiten Empfangsstärkeparameter der ersten elektronischen Vorrichtung durch die Antennenstruktur zu messen.

12. Verfahren nach einem der Ansprüche 1 bis 11, wobei die intelligente Vorrichtung eine Kamera aufweist und das Verfahren ferner Folgendes umfasst:
Anpassen eines Fotografierwinkels der Kamera basierend auf den Standortinformationen der ersten elektronischen Vorrichtung, sodass der Fotografierwinkel der Kamera zu einem Standort der ersten elektronischen Vorrichtung weist.

13. Verfahren nach einem der Ansprüche 1 bis 12, wobei das Verfahren ferner eine Hinweisnachricht an eine zweite elektronische Vorrichtung sendet, wobei die Hinweisnachricht die Standortinformationen der ersten elektronischen Vorrichtung und/oder Alarminformationen umfasst und die Alarminformationen dazu dienen, darauf hinzuweisen, dass sich eine unbekannte Vorrichtung oder eine verdächtige Person der intelligenten Vorrichtung nähert.

14. Intelligente Vorrichtung, wobei die intelligente Vorrichtung eine Antennenstruktur aufweist, eine Funksignalübertragungsdistanz der Antennenstruktur eine erste Übertragungsdistanz und eine zweite Übertragungsdistanz umfasst, die erste Übertragungsdistanz kleiner als die zweite Übertragungsdistanz ist und die intelligente Vorrichtung einen oder mehrere Prozessoren und einen Speicher umfasst, wobei der Speicher mit dem einen oder den mehreren Prozessoren gekoppelt ist, der Speicher dazu ausgelegt ist, einen Computerprogrammcode zu speichern, der Computerprogrammcode Computeranweisungen umfasst und wenn der eine oder die mehreren Prozessoren die Computeranweisungen ausführen, die intelligente Vorrichtung das Vorrichtungsstandortbestimmungsverfahren nach einem der Ansprüche 1 bis 13 durchführt.

15. Computerlesbares Speichermedium, das Computeranweisungen speichert, wobei eine Ausführung der Computeranweisungen auf einer intelligenten Vorrichtung ermöglicht, dass die intelligente Vorrichtung das Vorrichtungsstandortbestimmungsverfahren nach einem der Ansprüche 1 bis 13 durchführt.

## Revendications

1. Procédé de détermination d'emplacement de dispositif, appliqué à un dispositif intelligent ayant une structure d'antenne, dans lequel une distance de transmission de signal radio de la structure d'antenne comprend une première distance de transmission et une seconde distance de transmission, la première distance de transmission est inférieure à la seconde distance de transmission, et le procédé comprend :
la réception d'informations sur un premier dispositif électronique en provenance du premier dispositif électronique ;
la détermination, lors de la détermination de l'emplacement du premier dispositif électronique sur la base des informations sur le premier dispositif électronique, d'un premier paramètre de puissance reçue qui est du premier dispositif électronique et qui est mesuré lorsque la structure d'antenne fonctionne à la première distance de transmission ;
la détermination, lorsque le premier paramètre de puissance reçue indique que le premier dispositif électronique se trouve dans la première distance de transmission, d'un second paramètre de puissance reçue qui est du premier dispositif électronique et qui est mesuré lorsque la structure d'antenne fonctionne à la seconde distance de transmission ; et
la détermination d'informations d'emplacement du premier dispositif électronique sur la base du premier paramètre de puissance reçue et du second paramètre de puissance reçue.

2. Procédé selon la revendication 1, dans lequel les informations d'emplacement du premier dispositif électronique comprennent un emplacement du premier dispositif électronique par rapport au dispositif intelligent, et la détermination d'informations d'emplacement du premier dispositif électronique sur la base du premier paramètre de puissance reçue et du second paramètre de puissance reçue comprend :
la détermination d'une distance entre le premier dispositif électronique et le dispositif intelligent sur la base du premier paramètre de puissance reçue ;
la détermination d'informations d'orientation entre le premier dispositif électronique et le dispositif intelligent sur la base du second paramètre de puissance reçue ; et
la détermination de l'emplacement du premier dispositif électronique par rapport au dispositif intelligent sur la base de la distance et des informations d'orientation.

3. Procédé selon la revendication 1 ou 2, dans lequel, avant la réception d'informations sur un premier dispositif électronique en provenance du premier dispositif électronique, le procédé comprend en outre : la diffusion d'un message de découverte, dans lequel le message de découverte est destiné à demander à un dispositif qui reçoit le message de découverte de rapporter des informations sur le dispositif au dispositif intelligent.

4. Procédé selon l'une quelconque des revendications 1 à 3, dans lequel le dispositif intelligent a une liste blanche, la liste blanche enregistre des informations sur un ou plusieurs dispositifs, et le cas de la détermination d'emplacement du premier dispositif électronique sur la base des informations sur le premier dispositif électronique comprend en outre :
un cas dans lequel les informations sur le premier dispositif électronique n'appartiennent pas à la liste blanche.

5. Procédé selon la revendication 4, dans lequel lorsque les informations sur le premier dispositif électronique n'appartiennent pas à la liste blanche, le procédé comprend en outre :
l'envoi des informations sur le premier dispositif électronique à un second dispositif électronique ;
la réception d'une première instruction de fonctionnement en provenance du second dispositif électronique ; et
la détermination de l'emplacement du premier dispositif électronique en réponse à la première instruction de fonctionnement.

6. Procédé selon la revendication 4 ou 5, dans lequel le dispositif intelligent accède à un réseau par l'intermédiaire d'un dispositif d'accès sans fil, et le procédé comprend en outre :
l'obtention de la liste blanche à partir du dispositif d'accès sans fil.

7. Procédé selon l'une quelconque des revendications 1 à 3, dans lequel le procédé comprend en outre :
l'envoi des informations sur le premier dispositif électronique à un second dispositif électronique ;
la réception d'une deuxième instruction de fonctionnement en provenance du second dispositif électronique ; et
la détermination de l'emplacement du premier dispositif électronique en réponse à la deuxième instruction de fonctionnement.

8. Procédé selon l'une quelconque des revendications 1 à 7, dans lequel le procédé comprend en outre :
le démarrage d'un module logiciel de positionnement du dispositif intelligent lorsque le premier paramètre de puissance reçue indique que le premier dispositif électronique est situé dans la première distance de transmission, dans lequel le module logiciel de positionnement est configuré pour calculer les informations d'emplacement du premier dispositif électronique.

9. Procédé selon l'une quelconque des revendications 1 à 8, dans lequel le procédé comprend en outre :
la réception d'une troisième instruction de fonctionnement ; et
le réglage de la distance de transmission de signal radio de la structure d'antenne en réponse à la troisième instruction de fonctionnement.

10. Procédé selon l'une quelconque des revendications 1 à 9, dans lequel la structure d'antenne comprend une première antenne et une seconde antenne qui sont disposées indépendamment, une distance de transmission de signal radio de la première antenne est la première distance de transmission, et une distance de transmission de signal radio de la seconde antenne est la seconde distance de transmission ;
la détermination d'un premier paramètre de puissance reçue qui est du premier dispositif électronique et qui est mesuré lorsque la structure d'antenne fonctionne à la première distance de transmission comprend :
la mesure du premier paramètre de puissance reçue du premier dispositif électronique à travers la première antenne ; et
la détermination d'un second paramètre de puissance reçue qui est du premier dispositif électronique et qui est mesuré lorsque la structure d'antenne fonctionne à la seconde distance de transmission comprend :
la mesure du second paramètre de puissance reçue du premier dispositif électronique à travers la seconde antenne.

11. Procédé selon l'une quelconque des revendications 1 à 9, dans lequel la structure d'antenne est une structure d'antenne simple ;
la détermination d'un premier paramètre de puissance reçue qui est du premier dispositif électronique et qui est mesuré lorsque la structure d'antenne fonctionne à la première distance de transmission comprend :
la commande de la structure d'antenne pour fonctionner à la première distance de transmission, pour mesurer le premier paramètre de puissance reçue du premier dispositif électronique à travers la structure d'antenne ; et
la détermination, lorsque le premier paramètre de puissance reçue indique que le premier dispositif électronique se trouve dans la première distance d'émission, d'un second paramètre de puissance reçue qui est du premier dispositif électronique et qui est mesuré lorsque la structure d'antenne fonctionne à la seconde distance de transmission comprend :
lorsque le premier paramètre de puissance reçue indique que le premier dispositif électronique est situé dans la première distance de transmission, la commande de la distance de transmission de signal radio de la structure d'antenne pour passer de la première distance de transmission à la seconde distance de transmission, pour mesurer le second paramètre de puissance reçue du premier dispositif électronique à travers la structure d'antenne.

12. Procédé selon l'une quelconque des revendications 1 à 11, dans lequel le dispositif intelligent a une caméra, et le procédé comprend en outre :
le réglage d'un angle de photographie de la caméra sur la base des informations d'emplacement du premier dispositif électronique, de sorte que l'angle de photographie de la caméra est vers un emplacement du premier dispositif électronique.

13. Procédé selon l'une quelconque des revendications 1 à 12, dans lequel le procédé envoie en outre un message d'invite à un second dispositif électronique, dans lequel le message d'invite comprend les informations d'emplacement du premier dispositif électronique et/ou des informations d'alarme, et les informations d'alarme sont destinées à indiquer qu'un dispositif inconnu ou une personne suspecte s'approche du dispositif intelligent.

14. Dispositif intelligent, dans lequel le dispositif intelligent a une structure d'antenne, une distance de transmission de signal radio de la structure d'antenne comprend une première distance de transmission et une seconde distance de transmission, la première distance de transmission est inférieure à la seconde distance de transmission, et le dispositif intelligent comprend un ou plusieurs processeurs et une mémoire, dans lequel
la mémoire est couplée aux un ou plusieurs processeurs, la mémoire est configurée pour stocker un code de programme d'ordinateur, le code de programme d'ordinateur comprend des instructions d'ordinateur, et lorsque les un ou plusieurs processeurs exécutent les instructions d'ordinateur, le dispositif intelligent met en œuvre le procédé de détermination d'emplacement de dispositif selon l'une quelconque des revendications 1 à 13.

15. Support de stockage lisible par ordinateur, stockant des instructions d'ordinateur, dans lequel lorsque les instructions d'ordinateur sont exécutées sur un dispositif intelligent, le dispositif intelligent est en mesure de mettre en œuvre le procédé de détermination d'emplacement de dispositif selon l'une quelconque des revendications 1 à 13.
